(19) Europäisches Patentamt
European Patent Office
Office européen des brevets

(11) **EP 3 940 592 A1**

(12) **EUROPEAN PATENT APPLICATION**
published in accordance with Art. 153(4) EPC

(43) Date of publication:
**19.01.2022 Bulletin 2022/03**

(51) Int Cl.:
***G06K 9/62*** (2022.01)

(21) Application number: **20858192.6**

(86) International application number:
**PCT/CN2020/098839**

(22) Date of filing: **29.06.2020**

(87) International publication number:
**WO 2021/036471 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.08.2019 CN 201910801840**

(71) Applicant: **TENCENT TECHNOLOGY (SHENZHEN) COMPANY LIMITED**
**Shenzhen, GUANGDONG 518057, (CN)**

(72) Inventors:
• **WEI, Dong**
**Shenzhen, Guangdong 518057 (CN)**
• **MA, Kai**
**Shenzhen, Guangdong 518057 (CN)**
• **ZHENG, Yefeng**
**Shenzhen, Guangdong 518057 (CN)**

(74) Representative: **EP&C**
**P.O. Box 3241**
**2280 GE Rijswijk (NL)**

(54) **SAMPLE GENERATION METHOD AND APPARATUS, AND COMPUTER DEVICE AND STORAGE MEDIUM**

(57) A sample generation method, comprising: acquiring a real category feature vector extracted from each real sample respectively; splicing the real category feature vector with a real category label vector of the corresponding real sample; inputting each spliced vector, obtained by means of the splicing, into the current sample generation network, and performing mapping to obtain various pseudo-samples; determining mutual information between each pseudo-sample and the corresponding spliced vector; inputting the various real samples and the various pseudo-samples into the current sample determination network, performing, in conjunction with the mutual information, iterative adversarial training on the sample generation network and the sample determination network, and during the process of adversarial training, iteratively maximizing the mutual information until an iteration stop condition is satisfied; and inputting the various spliced vectors into a sample generation network when iteration stops, and outputting a pseudo-sample set.

FIG. 2

EP 3 940 592 A1

**Description**

RELATED APPLICATION

This application claims priority to Chinese Patent Application No. 201910801840.0, entitled "SAMPLE GENERATION METHOD AND APPARATUS, COMPUTER DEVICE, AND STORAGE MEDIUM" filed with the China National Intellectual Property Administration on August 28, 2019, which is incorporated herein by reference in its entirety.

FIELD OF THE TECHNOLOGY

The present disclosure relates to the field of computer technologies, further to the field of artificial intelligence technologies, especially, to the field of machine learning technologies, and in particular, to a sample generation method and apparatus, a computer device, and a storage medium.

BACKGROUND OF THE DISCLOSURE

With the rapid development of science and technology, various technologies emerge continuously, and training technologies of machine learning are widely applied, for example, training of a classifier model. During training of a classifier, a large amount of sample data is usually required. However, an amount of sample data is usually limited, and acquisition costs are high. Therefore, it is crucial to automatically generate dummy samples that can be used for classification training.

In a related method, some dummy samples that "look like real samples" are generated. However, the dummy samples need to be labeled with additional category labels, which consumes costs of labeling to obtain training data that can ultimately be used for classification training. Therefore, costs of the related method are relatively high.

SUMMARY

According to various embodiments provided in the present disclosure, a sample generation method and apparatus, a computer device, and a storage medium are provided.

A sample generation method is provided, performed by a computer device, the method including:

obtaining real category feature vectors extracted from real samples respectively;

splicing the real category feature vectors with real category label vectors corresponding to the real samples;

inputting spliced vectors obtained through splicing to a current sample generation network, to obtain dummy samples through mapping;

determining mutual information between the dummy samples and the corresponding spliced vectors;

inputting the real samples and the dummy samples to a current sample discrimination network, performing iterative adversarial training of the sample generation network and the sample discrimination network with reference to the mutual information, and iteratively maximizing the mutual information during the adversarial training until an iteration stop condition is met; and

inputting the spliced vectors to a trained sample generation network in response to a determination that the an iteration stop condition is met, to output a dummy sample set.

A sample generation apparatus is provided, disposed in a computer device, the apparatus including:

an extraction module, configured to obtain real category feature vectors extracted from real samples respectively;

a splicing module, configured to splice the real category feature vectors with real category label vectors corresponding to the real samples;

a training module, configured to input spliced vectors obtained through splicing to a current sample generation network, to obtain dummy samples through mapping; determine mutual information between the dummy samples and the corresponding spliced vectors; and inputting the real samples and the dummy samples to a current sample discrimination network, perform iterative adversarial training of the sample generation network and the sample discrimination network with reference to the mutual information, and iteratively maximize the mutual information during the adversarial training until an iteration stop condition is met; and

a dummy sample generation module, configured to input the spliced vectors to a trained sample generation network in response to a determination that the iteration stop condition is met, to output a dummy sample set.

A sample generation method is provided, performed by a computer device, the method including:

obtaining real category feature vectors extracted from real medical image samples respectively;

splicing the real category feature vectors with real category label vectors corresponding to the real medical image samples;

inputting spliced vectors obtained through splicing to a current sample generation network, to output dummy medical image samples;

determining mutual information between the dummy medical image samples and the corresponding spliced vectors;

inputting the real medical image samples and the dummy medical image samples to a current sample discrimination network, performing iterative adversarial training of the sample generation network and the sample discrimination network with reference to the mutual information, and iteratively maximizing the mutual information during the adversarial training until an iteration stop condition is met; and

inputting the spliced vectors to a trained sample generation network in response to a determinations that the iteration stop condition is met, to output final dummy medical image samples.

A sample generation apparatus is provided, disposed in a computer device, the apparatus including:

an extraction module, configured to obtain real category feature vectors extracted from real medical image samples respectively;

a splicing module, configured to splice the real category feature vectors with real category label vectors corresponding to the real medical image samples;

a training module, configured to input spliced vectors obtained through splicing to a current sample generation network, to output dummy medical image samples; determine mutual information between the dummy medical image samples and the corresponding spliced vectors; input the real medical image samples and the dummy medical image samples to a current sample discrimination network, perform iterative adversarial training of the sample generation network and the sample discrimination network with reference to the mutual information, and iteratively maximize the mutual information during the adversarial training until an iteration stop condition is met; and

a dummy medical image generation module, configured to input the spliced vectors to a trained sample generation network in response to a determination that the iteration stop condition is met, to output final dummy medical image samples.

A computer device is provided, including: a memory and one or more processors, the memory storing computer-readable instructions, the computer-readable instructions, when executed by the one or more processors, causing the one or more processors to perform the steps of the sample generation method in the various embodiments of the present disclosure.

One or more computer-readable storage media are provided, storing computer-readable instructions, the computer-readable instructions, when executed by one or more processors, causing the one or more processors to perform the steps of the sample generation method in the various embodiments of the present disclosure.

Details of one or more embodiments of the present disclosure are provided in the subsequent accompanying drawings and descriptions. Based on the specification, the accompanying drawings, and the claims of the present disclosure, other features, objectives, and advantages of the present disclosure become clearer.

BRIEF DESCRIPTION OF THE DRAWINGS

To describe technical solutions in embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other drawings from these accompanying drawings without creative efforts.

FIG. 1 is a diagram of an application scenario of a sample generation method according to an embodiment.

FIG. 2 is a schematic flowchart of a sample generation method according to an embodiment.

FIG. 3 is a schematic principle diagram of feature sifting according to an embodiment.

FIG. 4 is a schematic principle diagram of a sample generation method according to an embodiment.

FIG. 5 is a schematic block diagram of a generative adversarial network according to an embodiment.

FIG. 6 is a schematic flowchart of a sample generation method according to another embodiment.

FIG. 7 is a schematic diagram of dummy samples generated by using a related method according to an embodiment.

FIG. 8 is a schematic diagram of dummy samples generated by using a related method according to another embodiment.

FIG. 9 is a block diagram of a sample generation apparatus according to an embodiment.

FIG. 10 is a block diagram of a sample generation apparatus according to another embodiment.

FIG. 11 is a block diagram of a sample generation apparatus according to still another embodiment.

FIG. 12 is a block diagram of a computer device according to an embodiment.

DESCRIPTION OF EMBODIMENTS

To make the objectives, technical solutions, and advantages of the present disclosure clearer and more understandable, the present disclosure is further described in detail below with reference to the accompanying drawings and the embodiments. It is to be understood that the specific embodiments described herein are merely used for explaining the present disclosure but are not intended to limit the present disclosure.

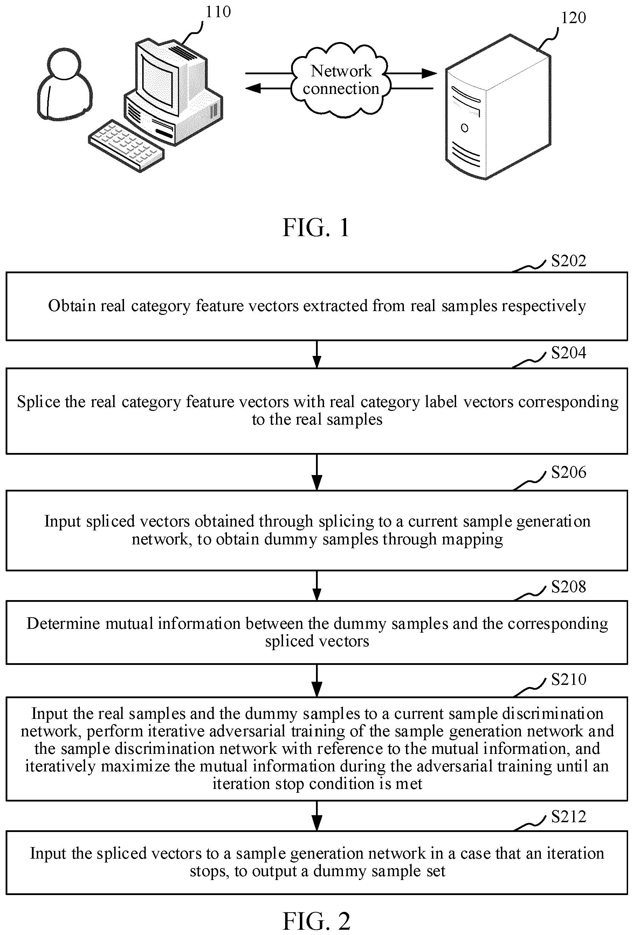

FIG. 1 is a diagram of an application scenario of a sample generation method according to an embodiment. Referring to FIG. 1, the application scenario includes a terminal 110 and a server 120 connected through a network. The terminal 110 may be a smart TV, a smart speaker, a desktop computer, or a mobile terminal, and the mobile terminal may include at least one of a mobile phone, a tablet computer, a notebook computer, a personal digital assistant, and a wearable device. The server 120 may be implemented by an independent server or a server cluster that includes a plurality of physical servers.
A user may input, through the terminal 110, a real sample added with a real category label, and the terminal may transmit the real sample and a real category label vector to the server 120. It may be understood that the server 120 may also directly obtain the real sample and a real category label vector from a database, which is not limited herein.
The server 120 may obtain real category feature vectors extracted from real samples respectively; splice (combine) the real category feature vectors with real category label vectors corresponding to the real samples, and input spliced vectors obtained through splicing to a current sample generation network, to obtain dummy samples through mapping. The server 120 may also determine mutual information between the dummy samples and the corresponding spliced vectors, input the real samples and the dummy samples to a current sample discrimination network, perform iterative adversarial training of the sample generation network and the sample discrimination network with reference to the mutual information, and iteratively maximize the mutual information during the adversarial training until an iteration stop condition is met; and input the spliced vectors to a trained sample generation network in response to a determination that the iteration stop condition is met, to output a dummy sample set.
FIG. 2 is a schematic flowchart of a sample generation method according to an embodiment. The sample generation method in this embodiment may be applied to a computer device. An example in which the computer device is the server 120 in FIG. 1 is mainly used herein for description. Referring to FIG. 2, the method specifically includes the following steps:

In S202, real category feature vectors extracted from real samples are obtained respectively.

The real sample is a pre-manufactured sample that is added with a real category label and that is not generated by a sample generation network. The real category label is a category label with higher reliability obtained through manual labeling in advance. It may be understood that the real category label is used for representing a category to which the real sample belongs.

In an embodiment, the real sample may be a sample in an image format, that is, a real image sample. Further, the real image sample may be a real medical image sample. It may be understood that there is a difference between a medical image and a natural image. The medical image refers to an image of internal tissue of a target object obtained in a non-invasive manner for medical treatment or medical research, for example, a liver lesion image. The natural image is an external image taken directly.

It may be understood that the real sample is not limited to the image format. In other embodiments, the real sample may alternatively be a sample in a format such as an audio format or a text format, which is not limited herein.

The real category feature vector is a feature vector used for discriminating a category of a real sample. It may be understood that the real category feature vector includes a feature used for discriminating the category of the real sample, that is, the real category feature vector includes a feature that has a high degree of category discriminativeness for the real sample.

It may be understood that when the real sample is the real image sample, the real category feature vector is a feature vector used for discriminating a category of the real image sample.

It may be understood that the feature represented by the real category feature vector is sparse feature embedding used for category discrimination in the real sample. Because the real sample includes many features, and features represented by the real category feature vector is some of the many features used for highly discriminating a category, compared with the many features included in the real sample, the real category feature vector is equivalent to sparse feature embedding. In addition, because the real category feature vector is hidden in the real sample, the real category feature vector is also referred to as a latent code.

Specifically, the computer device may directly obtain the real category feature vectors extracted from the real samples respectively. The computer device may alternatively perform feature extraction processing on the real samples, to obtain the real category feature vectors of the real samples.

It may be understood that feature vectors that remain after the real category feature vectors are sifted from feature vectors are real noise vectors. The real noise vector refers to a vector of a feature other than the features for category discrimination in the real sample. It may be understood that the real noise vectors can reflect diversity between the real samples. That is, because the real samples of the same category include different real noise vectors, there are differences between the real samples, leading to diversity.

In S204, the real category feature vectors are spliced (or combined) with real category label vectors corresponding to the real samples.

Specifically, for each real category feature vector, the computer device may determine the real category label vector of the real sample from which the real category feature vector is extracted, and splice to combine the real category feature vector and the real category label vector.

For example, the real category label vector is $y$, the real category feature vector is c, and a spliced vector formed by splicing the two is $c_y=[y, c^T]^T$, $T$ being a transposition symbol.

This is only used to indicate that the real category feature vector is spliced with the real category label vectors corresponding to the real samples, but is not limited to splicing only the real category feature vector with the real category label vector corresponding to the real sample, that is, a solution in which vectors other than the real category label vector corresponding to the real sample are spliced with the real category feature vector is not excluded. For example, the computer device may alternatively splice only the real category feature vector with the real category label vector corresponding to the real sample and the real noise vector, to obtain a spliced vector.

In S206, the spliced vectors obtained through splicing are input to a current sample generation network, to obtain dummy samples through mapping.

The current sample generation network is a sample generation network model in a current adversarial training process. It may be understood that before an iteration stop condition is met, the current sample generation network is an unstable network model that is in an intermediate state and that is being trained. The sample generation network is a neural network model used for generating a dummy sample through mapping according to inputted data.

The dummy sample refers to a sample that is not originally a real sample, but a sample that is fabricated by the sample generation network, that is similar to the real sample, and that can be used for classification training. It may be understood that the dummy sample is a sample that "looks like a real one" and that is generated by the sample generation network.

In an embodiment, the dummy sample is a dummy image sample. In an embodiment, the dummy image sample may be a dummy medical image sample.

Specifically, the computer device may input the spliced vector obtained through splicing to the current sample generation network, and the spliced vector is mapped to the dummy sample by the current sample generation network according to a current network model parameter.

This only indicates that the spliced vector obtained by splicing the real category feature vector and the corresponding real category label vector may be inputted to the current sample generation network, to generate the dummy sample for generative adversarial network (GAN) training, but is not limited to only a case in which the spliced vector obtained by splicing the real category feature vector and the corresponding real category label vector is inputted to the current sample generation network to generate the dummy sample. For example, a spliced vector obtained by splicing a dummy category feature vector and a dummy category label vector may alternatively be inputted to the current sample generation network, to generate the dummy sample. Alternatively, the real category feature vector may be spliced with the corresponding real category label vector and the real noise vector to obtain a spliced vector, and the spliced vector is inputted to the current sample generation network to generate the dummy sample. This is not limited herein.

In S208, mutual information between the dummy samples and the corresponding spliced vectors is determined.

The mutual information is used for representing common information between two objects.

Specifically, for each dummy sample, the computer device may determine a real category feature vector and a real category label vector included in a spliced vector that generates the dummy sample. The computer device may determine mutual information between the dummy sample and a vector obtained by splicing the determined real category feature vector and the determined real category label vector.

It may be understood that when the spliced vector of the dummy sample generated through mapping includes only the real category feature vector and the real category label vector, mutual information between the dummy sample and the spliced vector of the dummy sample generated through mapping is directly determined. When the spliced vector of the dummy sample generated through mapping further includes a vector other than the real category feature vector and the real category label vector, the mutual information between the dummy sample and the vector obtained by splicing the real category feature vector and the real category label vector is determined.

For ease of understanding, description is made by using an example. It is assumed that the real category label vector is $y$, the real category feature vector is c, and the real noise vector is z. For example, if $y$ and c are spliced, and a spliced vector $c_y$ obtained by splicing $y$ and $c$ is directly inputted to a current sample generation network, generate a dummy sample $\tilde{X}$, the mutual information is mutual information between $\tilde{X}$ and $cy$. In another example, if $y$, c, and z are spliced, and a spliced vector obtained by splicing $y$, c, and z is inputted to the current sample generation network, to generate a dummy sample $\tilde{X}$, The mutual information is not the mutual information between the dummy sample and the spliced vector, but is still the mutual information between $\tilde{X}$ and $c_y$ (that is, the vector obtained by splicing $y$ and $c$). That is, in the embodiments of the present disclosure, the mutual information between the dummy sample and the spliced vector obtained by splicing the determined real category feature vector and real category label vector is always determined.

Both the real category feature vector and the real category label vector can represent category features to some extent. Therefore, the vector obtained by splicing the real category feature vector and the real category label vector can more accurately represent the category feature. Therefore, the mutual information between the dummy sample and the spliced vector obtained by splicing the real category feature vector and the real category label vector can reflect an amount of category information included in the dummy sample. The larger amount of mutual information between the two indicates that the amount of category information included in the dummy sample is larger. Therefore, the mutual information may be added to the GAN training, and the mutual information is maximized iteratively in adversarial training, so that a final sample generation network can generate a dummy sample with category features.

In S210, the real samples and the dummy samples are input to a current sample discrimination network, iterative adversarial training of the sample generation network and the sample discrimination network is performed with reference to the mutual information, and the mutual information is iteratively maximized during the adversarial training until an iteration stop condition is met.

The current sample discrimination network is a sample discrimination network model in the current adversarial training process. It may be understood that before the iteration stop condition is met, the current sample discrimination network is an unstable network model that is in an intermediate state and that is being trained. The sample discrimination network is used for discriminating whether an inputted sample is a real sample or a dummy sample generated by the sample generation network. That is, the sample discrimination network is used for discriminating authenticity of the inputted sample.

The iteration stop condition is a condition for model training to reach a stable state. In an embodiment, the iteration stop condition may include a preset number of iterations. In other embodiments, the iteration stop condition may alternatively be that the sample discrimination network can no longer correctly discriminate the real sample and the dummy sample. For example, the sample discrimination network outputs the same probability of being a real sample when discriminating the real sample and the dummy sample.

Specifically, the computer device may input the real samples and the dummy samples to the current sample discrimination network, for the current sample discrimination network to discriminate a probability that each inputted sample is a real sample. In an ideal case, a sample discrimination network that can correctly discriminate authenticity of samples and output a probability of 1 for real samples and 0 for dummy samples. Therefore, the sample generation network can continuously adjust the network model parameter thereof according to an output result of the current sample discrimination network, to generate a dummy sample more similar to the real sample, so as to iteratively generate a dummy sample that the sample discrimination network cannot identify. In addition, when iterative adversarial training of the sample generation network and the sample discrimination network is performed, the mutual information needs to be referred to, and the mutual information is maximized iteratively during the adversarial training, so that the sample generation network can iteratively generate a dummy sample that not only cannot be identified by the sample discrimination network, but also can maximumly include the category information.

It may be understood that maximizing the mutual information may strengthen sensitivity and dependence of the sample generation network on a sample category feature vector, so as to generate the dummy sample with the category information.

In S212, the spliced vectors are input to a sample generation network in a case that an iteration stops (in response to a determination that the iteration stop condition has been met), to output a dummy sample set.

It may be understood that when the iteration stops, the sample generation network can generate the dummy sample that not only cannot be identified by the sample discrimination network but can maximumly include the category information.

Therefore, the computer device may input the spliced vectors to the sample generation network when the iteration stops, and the sample generation network maps the spliced vectors to corresponding dummy samples, to obtain the dummy sample set.

When only the real category feature vector and the real category label vector are spliced in the spliced vector, the spliced vector obtained by splicing the real category feature vector and the real category label vector is used during training of the sample generation network. After the iteration stops, the computer device may map, through the sample generation network when the iteration stops, the vector obtained by splicing the real category feature vector and the real category label vector to a dummy sample. When another vector is spliced in the spliced vector in addition to the real category feature vector and the real category label vector, the spliced vector obtained by splicing the real category feature vector, the real category label vector, and the another vector is used during training of the sample generation network. After the iteration stops, the computer device may map, through the sample generation network when the iteration stops, the entire spliced vector obtained by splicing the real category feature vector, the real category label vector, and the another vector to a dummy sample.

It may be understood that a length of a spliced vector inputted by the sample generation network during training needs to be consistent with a length of a spliced vector inputted when the sample generation network is used to generate a dummy sample. In addition, when the sample generation network is trained, a length of an inputted spliced vector is fixed and consistent.

It may be understood that because the generated dummy sample set includes obvious category information, which is equivalent to having a category label, the dummy sample set may be used as an amplified sample to update and train a classifier, to improve accuracy of the classifier.

In the foregoing sample generation method, real category feature vectors respectively extracted from the real samples are obtained; the real category feature vectors are spliced with the real category label vectors corresponding to the real samples; the spliced vectors obtained through splicing are inputted to the current sample generation network, to generate the dummy samples though mapping; the mutual information between the dummy samples and the spliced vectors are determined; the real samples and the dummy samples are inputted to the current sample discrimination network, iterative adversarial training of the sample generation network and the sample discrimination network is performed with reference to the mutual information, and the mutual information is iteratively maximized during the adversarial training until the iteration stop condition is met; and the spliced vectors are inputted to the sample generation network in a case that the iteration stops, to output the dummy sample set. The mutual information is maximized during the adversarial training, so that the generated dummy samples look like the real samples. In addition, because the spliced vectors are obtained by splicing the real category feature vectors and the real category label vectors of the real samples, the spliced vectors include obvious category information. Therefore, the spliced vectors are inputted to the trained sample generation network, and the generated dummy samples include obvious category information, which is equivalent to having a label, thereby avoiding processing of adding additional labels and reducing costs.

In an embodiment, the method further includes: obtaining real noise vectors in the real samples. Step S204 includes splicing the real category feature vectors with the corresponding real category label vectors and the real noise vectors. Step S208 includes determining mutual information between the dummy samples and corresponding real category feature combination vectors, the real category feature combination vectors being obtained by splicing the real category feature vectors and the corresponding real category label vectors.

The real noise vector refers to a vector of a feature other than the features for category discrimination in the real sample. That is, the real noise vector is irrelevant to category discrimination.

Specifically, the computer device may splice a real category feature vector with a corresponding real category label vector and a real noise vector corresponding to the real category feature vector. It may be understood that the real noise vector corresponding to the real category feature vector is a feature vector other than the real category feature vector in the real sample from which the real category feature vector is extracted. In this way, the spliced vectors inputted in step S206 are vectors obtained by splicing the real category feature vectors, the corresponding real category label vectors, and the real noise vectors.

In this embodiment, in step S208, it is not to determine the mutual information between the dummy samples and the spliced vectors obtained by splicing the three (the real category feature vector, the corresponding real category label vector, and the real noise vector), but to determine the mutual information between the dummy samples and the corresponding real category feature combination vectors, the real category feature combination vectors being obtained by splicing the real category feature vectors and the corresponding real category label vectors.

The real category feature combination vector is a combination vector used for representing category features in the real sample. That is, the real category feature combination vector is a vector that is obtained by combining the real category feature vector and a corresponding real category label and that is used for representing the category features in the real sample.

With reference to the foregoing example, the real category label vector is $y$, the real category feature vector is $c$, and the real noise vector is $z$. Assuming that $y$, $c$, and $z$ are spliced, and a spliced vector obtained by splicing $y$, $c$, and $z$ is inputted to a current sample generation network, to generate a dummy sample $\tilde{X}$, the mutual information is mutual information between $\tilde{X}$ and a real category feature combination vector $c_y$ (that is, a vector obtained by splicing $y$ and $c$).

In this embodiment, because when the sample generation network is trained, the spliced vectors that are inputted to the sample generation network and that are used for generating the dummy samples are obtained by splicing the real category feature vectors, the corresponding real category label vectors, and the real noise vectors, to maintain consistency with a training process, in this embodiment, in step S212, the spliced vectors obtained by splicing the real category feature vectors, the corresponding real category label vectors, and the real noise vectors are inputted to the sample generation network when the iteration stops, to output the dummy sample set.

In the foregoing embodiment, splicing the real category feature vectors, the corresponding real category label vectors, and the real noise vectors to train the sample generation network is equivalent to using real data to train the sample generation network, which can improve accuracy of the sample generation network. In addition, because the real noise vectors can reflect the diversity between the samples, the real noise vectors are spliced for iterative training, so that the dummy samples generated by the sample generation network when the iteration stops can have diversity.

In an embodiment, the method further includes: extracting feature vectors from the real samples respectively; performing feature decomposition on the feature vectors, and sifting feature vectors for category discrimination, to obtain the real category feature vectors; and obtaining feature vectors that remain after the feature vector sifting, to obtain the real noise vectors.

The feature vector is a feature vector of the real sample. It may be understood that the feature vector includes more comprehensive features of the real sample. That is, in addition to including features used for discriminating a category of the real sample, the feature vector further includes other features of other real samples.

For ease of understanding differences among the feature vector, the real category feature vector, and the real noise vector, description is made by using an example. For example, assuming that a real sample is a heart image, and the heart image includes many features such as a myocardial thickness and a size of the heart, feature vectors extracted from the heart image may include vectors of the features such as the myocardial thickness and the size of the heart. The feature of the myocardial thickness, in the heart image may be used for distinguishing whether the heart has a specific type of pathology. Therefore, the feature of the myocardial thickness, is a real category feature corresponding to the real category feature vector. However, although hearts of different people have different sizes, a size of the heart cannot be used to discriminate whether the heart has a specific type of pathology, that is, cannot be used for classification and discrimination. Therefore, the feature of the size of the heart is a feature corresponding to the real noise vector.

Specifically, the computer device may first extract feature vectors from the real samples respectively, then perform feature decomposition on each feature vector, and sift feature vectors for category discrimination, to obtain the real category feature vectors. The computer device may obtain the remaining feature vector other than the real category feature vectors sifted from the feature vectors, to obtain the real noise vector.

It may be understood that the computer device may use feature sifting methods, such as forward/backward sequential feature selection, principal component analysis (PCA), and a regression analysis method, to perform feature decomposition on the feature vectors, and sift feature vectors for category discrimination, to obtain the real category feature vectors.

In an embodiment, the computer device may sift feature vectors for category discrimination from the feature vectors based on a Lasso method.

Specifically, for each real sample, the computer device may pre-assign corresponding category feature coefficients to feature sub-vectors in the feature vector, to obtain category feature coefficient vectors. The computer device may construct an objective function of the category feature coefficient vectors according to a sum of squared residuals of products between a real category label vector of the real sample and the feature sub-vectors. In an optimization process, the category feature coefficients of the feature sub-vectors in the category feature coefficient vector are iteratively adjusted to iteratively search for a minimum value of the objective function of the category feature coefficient vector, so that the category feature coefficients of some feature sub-vectors can become 0. The feature sub-vectors corresponding to the category feature coefficients that have become 0 are irrelevant to category discrimination, while the feature sub-vectors corresponding to the category feature coefficients that do not become 0 are relevant to category discrimination. Therefore, the feature vector for category discrimination may be sifted. Further, the feature sub-vectors corresponding to the category feature coefficients that do not become 0 may be combined to obtain the real category feature vectors.

In an embodiment, the computer device may sift the feature vector for category discrimination from the feature vectors by optimizing the following objective function:

$$w = \underset{w}{\arg\min} \left( \sum \left( y_i - f_i^T w \right)^2 + \alpha \sum_{j=1}^{m} |w_j| \right) \quad \text{formula (1)}$$

where i represents a serial number in a real sample set, $w_j$ is an element in a coefficient vector w, $y_i$ is the $i^{th}$ real category label vector, $f_i$ is the $i^{th}$ feature sub-vector in a feature vector $f$, and $m$ is a quantity of feature sub-vectors in the feature vector $f$. By optimizing the formula (1), a Lasso algorithm can control $w_j$ well in an appropriate range, and more importantly, some of $w_j$ become 0, to implement feature sifting. A penalty constant a may control sparsity of the coefficient vector w : a greater a indicates more $w_j = 0$ . Elements corresponding to $w_j \neq 0$ in $f$ are extracted to form c, and the remaining part is a noise part z .

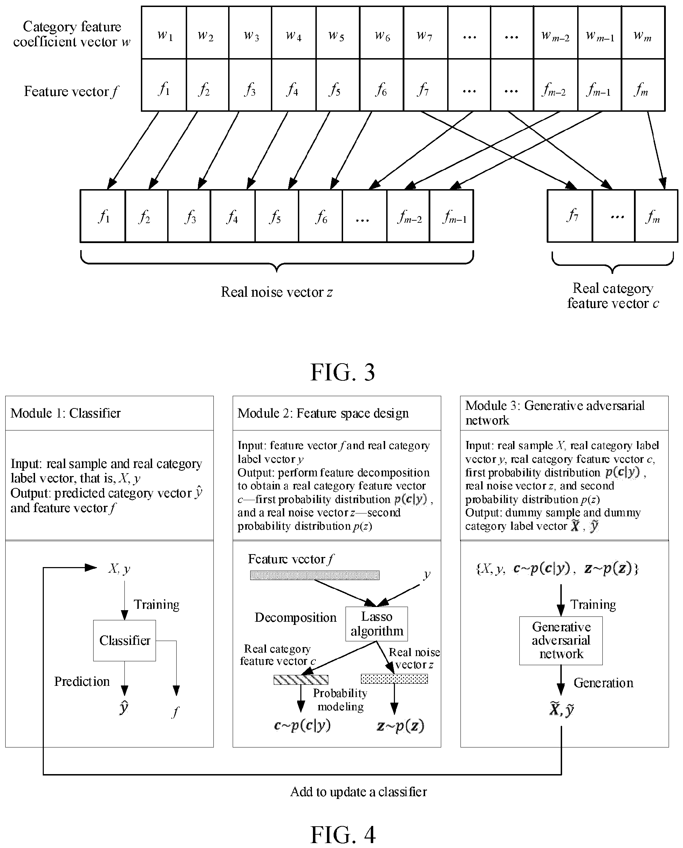

For ease of understanding, descriptions are provided with reference to FIG. 3. Referring to FIG. 3, the feature vector/includes a plurality of feature sub-vectors $f_l$ to $f_m$, the feature sub-vectors respectively have corresponding category feature coefficients $w_l$ to $w_m$, and it may be understood that $w_l$ to $w_m$ form a category feature coefficient vector W. Through iterative optimization until a stable state is reached, the category feature coefficients of some of the feature sub-vectors may be set to w=0. The feature sub-vectors of which category feature coefficients are 0 have no effect on category discrimination. However, the feature sub-vectors of which category feature coefficients $w \neq 0$ play a more important role in category discrimination. Therefore, referring to FIG. 3, shaded parts represent the feature sub-vectors corresponding to $w \neq 0$, the feature sub-vectors may form the real category feature vector c, and the remaining (that is, non-shaded parts) form the real noise vector z.

In the foregoing embodiment, feature decomposition is performed on the feature vector of the real sample, to sift the real category feature vector and the real noise vector. Because the real category feature vector has a high degree of category discriminativeness, and the real noise vector has diversity, the sample generation network is trained after splicing the real category feature vector and the real noise vector, to enable the sample generation network to generate a dummy sample with both category information and diversity.

In an embodiment, the method further includes: sampling from a first probability distribution according to a preset dummy category label vector, to obtain dummy category feature vectors, the first probability distribution being obtained by fitting the real category feature vectors; and splicing the dummy category feature vectors and the corresponding dummy category label vector, to obtain dummy spliced vectors, and inputting the dummy spliced vectors to the current sample generation network, to output dummy samples. Step S208 includes: determining mutual information between the dummy samples and the corresponding dummy spliced vectors in a case that the dummy samples are obtained by mapping the dummy spliced vectors.

Specifically, the computer device may fit the real category feature vectors corresponding to the same real category label vector, to obtain the first probability distribution. It may be understood that for real category feature vectors corresponding to each real category label vector, a corresponding first probability distribution is fitted. When there are a plurality of real category label vectors, a plurality of first probability distributions can be fitted. Each first probability distribution has a unique corresponding real category label vector.

In an embodiment, the computer device may fit the real category feature vectors by using a conditional Gaussian distribution, that is, in a case that the real category label vector is known, Gaussian distribution fitting is performed on the real category feature vectors, to obtain the first probability distribution.

The real category feature vector is not limited to being fitted by using the Gaussian distribution herein.

It may be understood that a difference between the dummy category label vector and the real category label vector mainly results from different sources. The real category label vector is a category label vector added for the real sample after the real sample is known, while the dummy category label vector is a category label vector that is preset without knowing a sample. Actually, the dummy category label vector is preset according to the known real category label vector. For example, there are a total of five types of real category labels in the real samples, vectors of the five types of real category labels may be preset and recorded as dummy category label vectors.

It may be understood that because the real category label vector has a corresponding first probability distribution, a dummy category label vector that is consistent with the real category label vector also corresponds to the first probability distribution. Therefore, the computer device may sample from the first probability distribution corresponding to the dummy category label vector according to the preset dummy category label vectors, to obtain dummy category feature vectors. It may be understood that because the first probability distribution is obtained by fitting the real category feature vectors, a feature vector used for discriminating a category can be obtained by sampling from the first probability distribution, that is, the dummy category feature vector. It may be understood that the dummy category feature vector is a feature vector that is sampled from the first probability distribution and that is used for discriminating a category.

Further, the computer device may splice dummy category feature vectors with corresponding dummy category label vectors, to obtain dummy spliced vectors. The dummy category label vector corresponding to the dummy category feature vector is the dummy category label vector according to which the dummy category feature vector is sampled.

In an embodiment, in step S206, when only the spliced vectors obtained by splicing the real category feature vectors and the real category label vectors corresponding to the real samples are inputted to the current sample generation network for training, the dummy spliced vectors obtained by splicing the dummy category feature vectors and the dummy category label vectors may be inputted to the current sample generation network to generate dummy samples for GAN training, to obtain a trained sample generation network. In this way, the sample generation network that meets the iteration stop condition may also map a spliced vector spliced with a category feature vector and a category label vector to generate a dummy sample.

In another embodiment, in step S206, when the spliced vectors obtained by splicing the real category feature vectors, the real category label vectors corresponding to the real samples, and the real noise vectors are inputted to the current sample generation network for training, dummy spliced vectors obtained by splicing the dummy category feature vectors, the dummy category label vectors, and dummy noise vectors may be inputted to the current sample generation network to generate dummy samples for GAN training, to obtain a trained sample generation network. In this way, the sample generation network that meets the iteration stop condition may also map a spliced vector spliced with a category feature vector, a category label vector, and a noise vector to generate a dummy sample.

It may be understood that a length of a spliced vector inputted by the sample generation network during training needs to be consistent with a length of a spliced vector inputted when the sample generation network is used to generate a dummy sample. In addition, when the sample generation network is trained, a length of an inputted spliced vector is fixed and consistent.

The computer device may input the dummy spliced vectors to the current sample generation network, to generate the dummy samples. It may be understood that a spliced vector including a real category feature vector and a real category label vector is a real spliced vector. The computer device may respectively input the real spliced vector and the dummy spliced vector to the current sample generation network, to generate dummy samples. In this way, a dummy sample obtained by mapping the real spliced vector and a dummy sample obtained by mapping the dummy spliced vector may be obtained.

It may be understood that when the dummy samples are obtained by mapping the dummy spliced vectors, the computer device may determine mutual information between the dummy samples and the corresponding dummy spliced vectors, rather than determining mutual information between the dummy samples and the real spliced vectors.

In other embodiments, the computer device may alternatively obtain a dummy category feature vector that belongs to a mode and that is obtained by sampling from the first probability distribution according to a preset dummy category label vector, splice the dummy category feature vector that belongs to the mode with a corresponding dummy category label vector, and input a spliced vector to a sample generation network, to generate the most representative positive and negative dummy samples.

In the foregoing embodiment, the first probability distribution obtained by fitting the real category feature vectors is sampled, to obtain dummy category feature vectors including relatively accurate category features. Further, the dummy category feature vectors are spliced with corresponding dummy category label vectors, to train the sample generation network, so that data can be amplified more accurately.

In an embodiment, the dummy spliced vectors further include dummy noise vectors. The method further includes: obtaining the real noise vectors in the real samples other than the real category feature vectors; fitting the real noise vectors, to obtain a second probability distribution; and sampling from the second probability distribution, to obtain the dummy noise vectors. In this embodiment, the determining mutual information between the dummy samples and the corresponding dummy spliced vectors includes: determining mutual information between the dummy samples and corresponding dummy category feature combination vectors, the dummy category feature combination vectors being obtained by splicing the dummy category feature vectors and the dummy category label vectors.

Specifically, the computer device may perform fitting for the real noise vectors (that is, a plurality of real noise vectors, equivalent to a group of real noise vectors), to obtain the second probability distribution.

In an embodiment, the computer device may fit the real noise vectors by using a Gaussian distribution. The real noise vector is not limited to being fitted by using the Gaussian distribution herein, and may alternatively be fitted in another fitting manner.

In an embodiment, a multivariate Gaussian distribution can be used to fit the real noise vectors.

It may be understood that the computer device may uniformly fit all real noise vectors, to obtain a unified second probability distribution. The computer device may alternatively fit, according to a preset category label vector, real noise vectors in real samples under the category label vector, to obtain a plurality of second probability distributions, which is not limited herein.

The computer device may sample from the second probability distribution, to obtain the dummy noise vectors, splice the dummy category feature vectors, the dummy category label vectors, and the dummy noise vectors that are obtained through sampling, and input dummy spliced vectors obtained through splicing to a current sample generation network to generate the dummy samples.

The computer device may determine the mutual information between the dummy samples and corresponding dummy category feature combination vectors, the dummy category feature combination vectors being obtained by splicing the dummy category feature vectors and the dummy category label vectors. It may be understood that the dummy category feature combination vector is a vector that is obtained by combining the dummy category feature vector and a corresponding real category label and that is used for representing category features.

In the foregoing embodiment, the second probability distribution obtained by fitting the real noise vectors is sampled, to obtain a more accurate and diverse dummy noise vector, and further, train the sample generation network according to vectors spliced with the dummy noise vectors, the dummy category feature vectors, and the corresponding dummy category label vectors, so that data can be amplified more accurately.

FIG. 4 is a schematic principle diagram of a sample generation method according to an embodiment. Referring to FIG. 4, in Module 1, according to a real sample $X$ and a real category label vector $y$, a classifier $Co$ is trained to output a feature vector $f$. It may be understood that a process of training the classifier $Co$ according to the real sample $X$ and the real category label vector $y$ involves extraction of features. Therefore, the feature vector $f$ of the real sample $X$ and a predicted category label vector $\hat{y}$ can be outputted and obtained. In Module 2, feature space design is performed, so that feature decomposition can be performed on the feature vector $f$ according to the real category label vector $y$ by using a Lasso algorithm, to obtain a real category feature vector c (that is, a feature embedding part with a high degree of category discriminativeness) and a real noise vector z (that is, a random noise part that causes other diversity of the real sample). Subsequently, probability modeling is respectively performed for c and z, and a first probability distribution $p(c|y) \sim N(u, \Sigma)$ of a conditional Gaussian distribution subject to c and a second probability distribution $p(z) \sim N(u,\Sigma)$ of a multivariate Gaussian distribution subject to z are obtained through fitting. Next, in Module 3, a dummy label $\tilde{y}$ is specified, and $p(z)$ and $p(c|\tilde{y})$ are sampled, to obtain a dummy category feature vector $\tilde{c}$ and a dummy noise vector $\tilde{z}$, and GAN training is performed according to $\tilde{c}$, $\tilde{z}$, and $\tilde{y}$, c, z, and y, and the real sample $X$. After the GAN training reach a balanced state, a dummy sample $\tilde{X}$ is generated according to a finally obtained sample generation network. The dummy sample $\tilde{X}$ includes category information, so that it is equivalent to obtaining a dummy sample with the category label $\tilde{y}$. It may be understood that the dummy samples $\tilde{X}$ may be added to the real sample $X$ to update and train $Co$ together, to obtain a better classifier, denoted as $C_1$. Iterating the foregoing process may further improve performance of the classifier, because theoretically, $C_1$ can produce a better feature space than $Co$.

In an embodiment, the inputting the spliced vectors to a sample generation network in a case that an iteration stops (in response to a determination that an iteration stop condition is met), to output a dummy sample set includes: using the real category feature vectors and the dummy category feature vectors as levels in a category feature vector factor and the real noise vectors and the dummy noise vectors as levels in a noise vector factor, and performing cross-grouping on the levels in the category feature vector factor and the levels in the noise vector factor, to obtain to-be-spliced combinations; obtain a category label vector corresponding to a category feature vector included in each to-be-spliced combination; splicing vectors included in the same to-be-spliced combination with the corresponding category label vector; and inputting vectors obtained by splicing the to-be-spliced combinations to the sample generation network in a case that the iteration stops, to output final dummy samples.

It may be understood that the real category feature vector and the dummy category feature vector belong to the category feature vector factor. The real noise vector and the dummy noise vector belong to the noise vector factor. It may be equivalent to obtaining, by cross-grouping category feature vectors (including the real category feature vectors and the dummy category feature vectors) and noise vectors (including the real noise vectors and the dummy noise vectors), to-be-spliced combinations to be inputted to the sample generation network when the iteration stops. Each to-be-spliced combination includes one category feature vector and one noise vector.

In an embodiment, cross-grouping is performed on the levels in the category feature vector factor and the levels in the noise vector factor, to obtain at least one of the following to-be-spliced combinations:

a to-be-spliced combination including the real noise vector, the real category feature vector, and a real label vector corresponding to the real category feature vector;

a to-be-spliced combination including the dummy noise vector, the dummy category feature vector, and a dummy label vector corresponding to the dummy category feature vector;

a to-be-spliced combination including the dummy noise vector, the real category feature vector, and the real label vector corresponding to the real category feature vector; and

a to-be-spliced combination including the real noise vector, the dummy category feature vector, and the dummy label vector corresponding to the dummy category feature vector.

It may be understood that the combination obtained through cross-grouping may include the real category feature vector c from the real sample and the dummy noise vector $\tilde{z}$ obtained through sampling, the dummy category feature vector $\tilde{c}$ obtained through sampling plus the real noise vector z from the real sample, and the dummy category feature vector $\tilde{c}$ and the dummy noise vector $\tilde{z}$ that are both obtained through sampling, or may include the real category feature vector c from the real sample and the real noise vector z from the real sample. It may be understood that there may be a plurality of real category feature vectors, dummy category feature vectors, real noise vectors, and dummy noise vectors, which is equivalent to having a plurality of levels in the same factor (the category feature vector factor or the noise vector factor). Therefore, a plurality of levels of different factors are cross-grouped to obtain a plurality of to-be-spliced combinations.

Subsequently, the computer device may further determine, according to category feature vectors included in each to-be-spliced combination, a category label vector corresponding to the to-be-spliced combination. For example, for the real category feature vector included in the to-be-spliced combination, the category label vector corresponding to the to-be-spliced combination is a real category label vector corresponding to the real category feature vector. For the dummy category feature vector included in the to-be-spliced combination, the category label vector corresponding to the to-be-spliced combination is a dummy category label vector corresponding to the dummy category feature vector.

Further, the computer device may splice vectors included in the same to-be-spliced combination with the corresponding category label vector, and input vectors obtained by splicing the to-be-spliced combinations to the sample generation network when the iteration stops, to output final dummy samples.

In the foregoing embodiment, the real category feature vectors and the dummy category feature vectors are cross-grouped with the real noise vectors and the dummy noise vectors, to obtain to-be-spliced combinations, vectors included in the same to-be-spliced combination are spliced with a corresponding category label vector, and vectors obtained by splicing the to-be-spliced combinations are inputted to the sample generation network in a case that the iteration stops, which can amplify a large amount of more accurate input data, thereby accurately amplifying dummy samples.

In an embodiment, the inputting the real samples and the dummy samples to the current sample discrimination network, and performing iterative adversarial training of the sample generation network and the sample discrimination network with reference to the mutual information includes: inputting the real samples and the dummy samples to the current sample discrimination network, to construct an objective function of the sample generation network and an objective function of the sample discrimination network, and performing iterative adversarial training of the sample generation network and the sample discrimination network with reference to the mutual information that serves as a regularization function, to iteratively search for a minimum value of the objective function of the sample generation network, search for a maximum value of the objective function of the sample discrimination network, and maximize the regularization function.

It may be understood that the dummy samples inputted to the current sample discrimination network may include a dummy sample obtained by mapping a real spliced vector and a dummy sample obtained by mapping a dummy spliced vector.

Specifically, the computer device may input the real samples and the dummy samples to the current sample discrimination network, and construct the objective function of the sample generation network and the objective function of the sample discrimination network. It may be understood that the objective function of the sample generation network and the objective function of the sample discrimination network may be a maximin objective function, and the mutual information may be used as a regularization function in the objective function. The computer device may iteratively perform adversarial training of the maximin objective function, to iteratively search for, in the maximin objective function, a minimum value corresponding to the sample generation network, search for, in the maximin objective function, a maximum value corresponding to the sample discrimination network, and maximize the regularization function, to maximize the mutual information.

In an embodiment, the maximin objective function may be represented by using the following formulas:

$$\min_{G} \max_{D} V_{\mathrm{GAN}}(D, G) = \mathbb{E}[\log D(X)] + \mathbb{E}\left[\log\left(1 - D\left(G(z, c_y)\right)\right)\right] \quad \text{formula (2)}$$

$$I\left(c_y; G(z, c_y)\right) = H(c_y) - H(c_y|G(z, c_y)) \quad \text{formula (3)}$$

$$\min_{G} \max_{D} V_I(D, G) = V(D, G) - \lambda I\left(c_y; G(z, c_y)\right) \quad \text{formula (4)}$$

It may be understood that formula (2) is a maximin objective function without considering mutual information optimization, where $G(z, c_y)$ is a dummy sample, $X$ is a real sample, $D(X)$ is a probability discriminated by the sample discrimination network for the real sample, and $D(G(z, c_y))$ is a probability discriminated by the sample discrimination network for the dummy sample. Formula (3) is the mutual information, and $c_y$ is a spliced vector of $c$ and $y$. Formula (4) is obtained by combining formula (2) and formula (3), that is, a maximin objective function obtained after adding the regularization function that represents the mutual information in this embodiment, where $\lambda$ is a weight. It may be understood that formula (4) is optimized for iterative adversarial training.

In an embodiment, an auxiliary distribution network $Q(c_y|G(z, c_y))$ may be introduced to determine a lower boundary of mutual information I as:

$$L_I(G, Q) = \mathbb{E}_{z \sim p(z), c_y \sim p(c_y)}\left[\log Q(c_y|G(z, c_y))\right] + H(c_y) \leq I\left(c_y; G(z, c_y)\right) \quad \text{formula (5)}$$

Therefore, $\lambda I(c_y; G(z, c_y))$ in formula (4) may be replaced with formula (5), to obtain the following maximin objective function:

$$\min_{G, Q} \max_{D} V_{\mathrm{Info}}(D, G, Q) = V(D, G) - \lambda L_I(G, Q) \quad \text{formula (6)}$$

It may be understood that the auxiliary distribution network $Q(c_y|G(z, c_y))$ shares network parameters with the sample discrimination network.

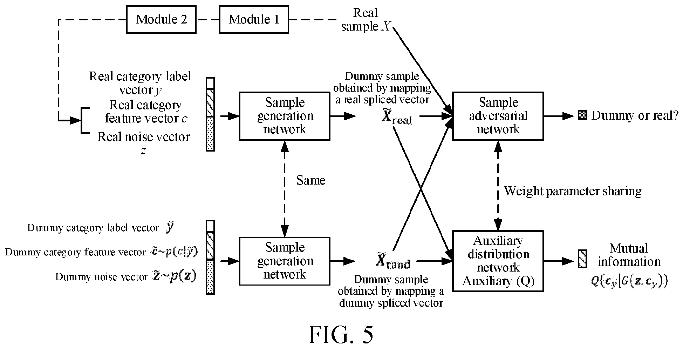

FIG. 5 is a schematic block diagram of a generative adversarial network according to an embodiment. Referring to FIG. 5, after a real sample $X$ passes through Module 1 and Module 2, $y$, $c$, and $z$ are obtained, and after c and z are fitted, $p(z)$ and $p(c|\tilde{y})$ are obtained. Random sampling is performed on $p(z)$ and $p(c|\tilde{y})$ according to a dummy category label vector $\tilde{y}$, to obtain $\tilde{z}$ and $\tilde{c}$. Subsequently, $y$, c, and z may be spliced into a vector, that is, a real spliced vector. $\tilde{y}$, $\tilde{c}$, and $\tilde{z}$ are spliced into a vector, that is, a dummy spliced vector. The real spliced vector and the dummy spliced vector are respectively inputted to a sample generation network, to generate dummy samples $\tilde{X}_{real}$ and $\tilde{X}_{rand}$. The real sample $X$ and the dummy samples $\tilde{X}_{real}$ and $\tilde{X}_{rand}$ are inputted to a sample discrimination network to determine whether a sample is a real sample or a dummy sample (that is, to determine whether an input comes from the real sample or the sample generation network). An effective discriminator needs output 1: $D(X)=1$ for real samples and 0: $D(\tilde{X})=0$ for dummy samples. An objective of a generator is to generate dummy samples that can fool the discriminator. Adversarial training of the discriminator and the generator is performed, when a system reaches a balanced state, $D(X)= D(\tilde{X})=0.5$, the discriminator cannot determine a source of a sample, and the objective of the generator is achieved. Referring to FIG. 5, mutual information between the dummy sample and a spliced vector $C_y$ obtained by splicing the category label vector and a sample category feature vector is considered, and an auxiliary distribution network Auxiliary (Q) is introduced, to prove a lower boundary of the mutual information, that is, a maximum representation of the mutual information. Further, in iterative adversarial training, the mutual information is maximized until the training stops. The auxiliary distribution network shares weight parameters with the sample discrimination network.

In the foregoing embodiment, adversarial training is iteratively performed by using the real samples, the dummy samples, and regularized mutual information, to iteratively search for a minimum value of an objective function of the sample generation network, search for a maximum value of an objective function of the sample discrimination network, and maximize a regularization function, so that a final sample generation network obtained through training can generate a dummy sample that not only looks like a real sample, but also has more category information.

In an embodiment, a spliced vector including a real category feature vector and a corresponding real category label vector is a real spliced vector. The method further includes: obtaining a dummy sample obtained by mapping the real spliced vector, to obtain a reconstructed dummy sample; and obtaining a reconstruction loss function, the reconstruction loss function being configured to represent a difference between the reconstructed dummy sample and a corresponding real sample. In this embodiment, the inputting the real samples and the dummy samples to a current sample discrimination network, performing iterative adversarial training of the sample generation network and the sample discrimination network with reference to the mutual information includes: inputting the real samples and the dummy samples to the current sample discrimination network, performing iterative adversarial training of the sample generation network and the sample discrimination network with reference to the mutual information and the reconstruction loss function.

It may be understood that the real spliced vector may include only the real category feature vector and the corresponding real category label vector, or may include the real category feature vector, the real category label vector, and a real noise vector.

The computer device may input the real spliced vectors to the current sample generation network in step S206, to generate the dummy samples through mapping. It may be understood that the dummy sample is a sample reconstructed according to real data, that is, a reconstructed dummy sample. The computer device may generate a reconstruction loss function according to a difference between the reconstructed dummy sample and a corresponding real sample. The real samples and the dummy samples are inputted to the current sample discrimination network, iterative adversarial training of the sample generation network and the sample discrimination network is performed with reference to the mutual information and the reconstruction loss function, and during the adversarial training, the mutual information is iteratively maximized and a minimum value of the reconstruction loss function is searched for until the iteration stop condition is met.

In an embodiment, a formula of the reconstruction loss function is:

$$L_r(G) = \mathbb{E}_{X \sim p_{data}(X)} \left[ \left\| G(z, c_y) - X \right\|_1 \right] \qquad \text{formula (7)}$$

It may be understood that formula (7) is substituted into the maximin objective function in formula (6), and the following final maximin objective function may be obtained:

$$\min_{G,Q} \max_{D} V(D, G, Q) = V(D, G) - \lambda_I L_I(G, Q) + \lambda_r L_r(G) \qquad \text{formula (8)}$$

where $\lambda_I$ represents a weight of the mutual information, and $\lambda_r$ represents a weight of the reconstruction loss function.

The classifier, the sample generation network, the sample discrimination network, and the auxiliary distribution network in the embodiments of the present disclosure may all be the same type or different types of deep convolutional neural networks (CNN), for example, may be any one or more of deep CNNs such as a vanilla CNN (a network used for optimal regression of coordinates of face markers), a residual network (ResNet), and a DenseNet. The objective function of the sample discrimination network in formula (2) may be changed from a logarithm to a mean square error, which can improve training stability. The method in the embodiments of the present disclosure is not limited to generating dummy samples for a binary classification task, and may also be applied to dummy samples for a multi-class classification task, to achieve data amplification and balance.

In the foregoing embodiment, adversarial training is performed iteratively with reference to the reconstruction loss function and the mutual information, so that the trained sample generation network can generate a dummy sample that not only includes category information, but also is more similar to the real sample.

In an embodiment, the real category feature vector includes a plurality of features used for representing real sample categories. The method further includes: selecting target features from the real category feature vectors; evenly selecting feature values within a preset range for the target features, and maintaining feature values of non-target features of the real category feature vectors unchanged, to obtain a plurality of associated real category feature vectors; and inputting the plurality of associated real category feature vectors to the sample generation network in a case that the iteration stops, to output associated dummy samples.

The target feature is a feature selected from the real category feature vector and used for achieving visualization. It may be understood that the associated dummy sample outputted and displayed can visually gradually display the target feature.

The associated real category feature vectors are real category feature vectors that are associated with each other in terms of the target feature.

It may be understood that for the target feature, feature values are evenly selected within a preset range, and feature values of non-target features of the real category feature vectors are maintained unchanged, so that a difference between the obtained associated real category feature vectors is mainly reflected in the target feature, because the target features are evenly valued, the associated real category feature vectors are associated with each other in terms of the target feature.

Further, the computer device may input the plurality of associated real category feature vectors to the sample generation network in a case that the iteration stops, to output associated dummy samples. The displayed associated dummy samples show gradual visual performance for a target feature, so as to realize visual display of the target feature.

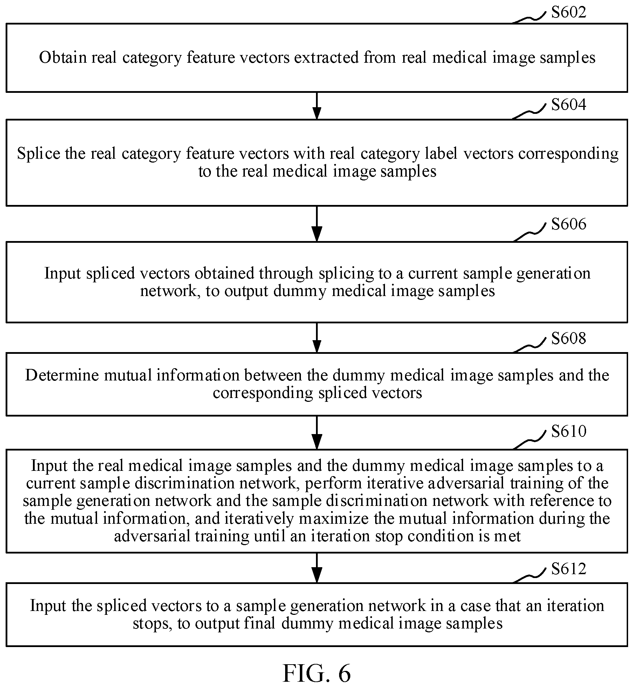

As shown in FIG. 6, in an embodiment, a sample generation method is provided. The method specifically includes the following steps:

In S602, real category feature vectors extracted from real medical image samples are obtained respectively.

In S604, the real category feature vectors are spliced (or combined) with real category label vectors corresponding to the real medical image samples.

In S606, spliced vectors obtained through splicing are input to a current sample generation network, to output dummy medical image samples.

In S608, mutual information between the dummy medical image samples and the corresponding spliced vectors is determined.

In S610, the real medical image samples and the dummy medical image samples are input to a current sample discrimination network, iterative adversarial training of the sample generation network and the sample discrimination network is performed with reference to the mutual information, and the mutual information is iteratively maximized during the adversarial training until an iteration stop condition is met.

In S612, the spliced vectors are input to a (trained) sample generation network in a case that an iteration stops (in response to a determination that the iteration stop condition is met), to output final dummy medical image samples.

In an embodiment, the method further includes:

obtaining real noise vectors in the real medical image samples.

The splicing the real category feature vectors with real category label vectors corresponding to the real medical image samples includes:

splicing the real category feature vectors with the corresponding real category label vectors and the real noise vectors.

The determining mutual information between the dummy medical image samples and the corresponding spliced vectors includes:

determining mutual information between the dummy medical image sample and corresponding real category feature combination vectors, the real category feature combination vectors being obtained by splicing the real category feature vectors and the corresponding real category label vectors.

In an embodiment, the method further includes:

extracting feature vectors from the real medical image samples respectively;

performing feature decomposition on the feature vectors, and sifting feature vectors for category discrimination, to obtain the real category feature vectors; and

obtaining feature vectors that remain after the feature vector sifting, to obtain the real noise vectors.

In an embodiment, the method further includes:

sampling from a first probability distribution according to a preset dummy category label vector, to obtain dummy category feature vectors, the first probability distribution being obtained by fitting the real category feature vectors; and

splicing the dummy category feature vectors and the corresponding dummy category label vector, to obtain dummy spliced vectors, and inputting the dummy spliced vectors to a current medical image sample generation network, to output dummy medical image samples.

The determining mutual information between the dummy medical image samples and the corresponding spliced vectors includes:

determining mutual information between the dummy medical image samples and corresponding dummy spliced vectors in a case that the dummy medical image samples are obtained by mapping the dummy spliced vectors.

In an embodiment, the dummy spliced vectors further include dummy noise vectors. The method further includes:

obtaining real noise vectors in the real medical image samples other than the real category feature vectors;

fitting the real noise vectors, to obtain a second probability distribution; and

sampling from the second probability distribution, to obtain the dummy noise vectors.

The determining mutual information between the dummy medical image samples and corresponding dummy spliced vectors includes:
determining mutual information between the dummy medical image samples and corresponding dummy category feature combination vectors, the dummy category feature combination vectors being obtained by splicing the dummy category feature vectors and the dummy category label vectors.

In an embodiment, the inputting the spliced vectors to a medical image sample generation network in a case that an iteration stops, to output a dummy medical image sample set includes:

using the real category feature vectors and the dummy category feature vectors as levels in a category feature vector factor and the real noise vectors and the dummy noise vectors as levels in a noise vector factor, and performing cross-grouping on the levels in the category feature vector factor and the levels in the noise vector factor, to obtain to-be-spliced combinations;

obtaining a category label vector corresponding to a category feature vector included in each to-be-spliced combination;

splicing vectors included in the same to-be-spliced combination with the corresponding category label vector; and

inputting vectors obtained by splicing the to-be-spliced combinations to the medical image sample generation network in a case that the iteration stops, to output final dummy medical image samples.

In an embodiment, the to-be-spliced combinations may include at least one of the following combinations:

a to-be-spliced combination including the real noise vector, the real category feature vector, and a real label vector corresponding to the real category feature vector;

a to-be-spliced combination including the dummy noise vector, the dummy category feature vector, and a dummy label vector corresponding to the dummy category feature vector;

a to-be-spliced combination including the dummy noise vector, the real category feature vector, and the real label vector corresponding to the real category feature vector; and

a to-be-spliced combination including the real noise vector, the dummy category feature vector, and the dummy label vector corresponding to the dummy category feature vector.

In an embodiment, the inputting the real medical image samples and the dummy medical image samples to a current medical image sample discrimination network, performing iterative adversarial training of the medical image sample generation network and the medical image sample discrimination network with reference to the mutual information includes:
inputting the real medical image samples and the dummy medical image samples to the current medical image sample discrimination network, to construct an objective function of the medical image sample generation network and an objective function of the medical image sample discrimination network, and performing iterative adversarial training of the medical image sample generation network and the medical image sample discrimination network with reference to the mutual information that serves as a regularization function, to iteratively search for a minimum value of the objective function of the medical image sample generation network, search for a maximum value of the objective function of the medical image sample discrimination network, and maximize the regularization function.

In an embodiment, a spliced vector including a real category feature vector and a corresponding real category label vector is a real spliced vector.

The method further includes:

obtaining a dummy medical image sample obtained by mapping the real spliced vector, to obtain a reconstructed dummy medical image sample; and

obtaining a reconstruction loss function, the reconstruction loss function being configured to represent a difference between the reconstructed dummy medical image sample and a corresponding real medical image sample.

The inputting the real medical image samples and the dummy medical image samples to the current medical image sample discrimination network, performing iterative adversarial training of the medical image sample generation network and the medical image sample discrimination network with reference to the mutual information, and iteratively maximizing the mutual information during the adversarial training until an iteration stop condition is met includes: inputting the real medical image samples and the dummy medical image samples to the current medical image sample discrimination network, performing iterative adversarial training of the medical image sample generation network and the medical image sample discrimination network with reference to the mutual information and the reconstruction loss function, and iteratively maximizing the mutual information and searching for a minimum value of the reconstruction loss function during the adversarial training until the iteration stop condition is met.

In an embodiment, the real category feature vector includes a plurality of features used for representing real medical image sample categories, and the method further includes:

selecting target features from the real category feature vectors;

evenly selecting feature values within a preset range for the target features, and maintaining feature values of non-target features of the real category feature vectors unchanged, to obtain a plurality of associated real category feature vectors; and

inputting the plurality of associated real category feature vectors to the medical image sample generation network in a case that the iteration stops, to output associated dummy medical image samples.

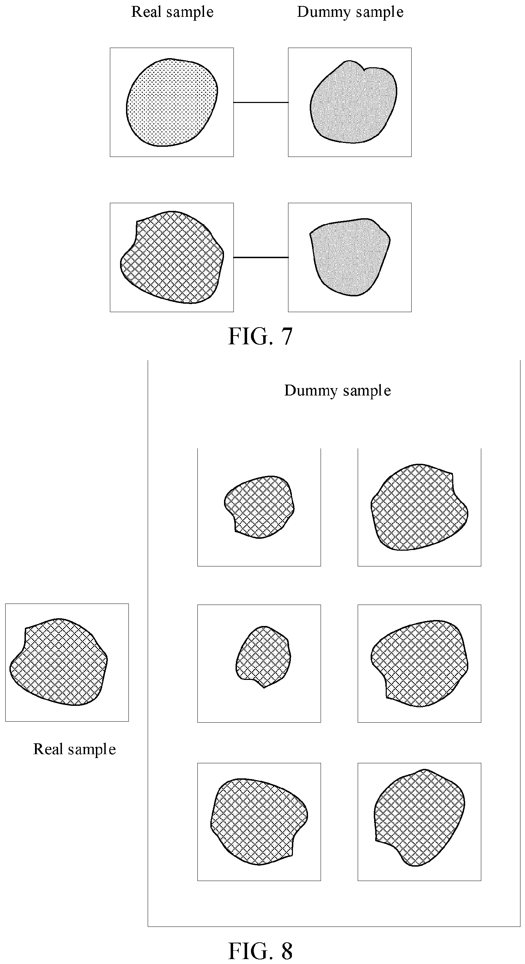

It may be understood that in the related method, a dummy sample image that "looks like a real one" obtained through data amplification does not have obvious category features, for example, a sample looks like a heart, but does not have obvious detailed category features such as a myocardial thickness, so that additional labels need to be added manually. FIG. 7 simply illustrates dummy sample images generated by using the related method, showing two sets of comparison diagrams, the left sides of the sets of comparison diagrams are schematic diagrams of real samples, and the right sides of the sets of comparison diagrams are schematic diagrams of dummy samples. Referring to FIG. 7, the dummy sample only looks like the real sample, but does not have obvious detailed category features as the real sample. However, in the sample generation method in the embodiments of the present disclosure, mutual information is maximized during the adversarial training, so that a generated dummy sample not only looks like a real sample, but also includes category information, and therefore, includes detailed information for discriminating a category, which is equivalent to having a label. Compared with the related method requiring an additional label to be manually added, in the presently disclosed method, costs of labeling are greatly reduced.

In addition, in some related methods, dummy samples are obtained by performing operations such as random translation, rotation, flipping, and scaling on a region of interest (ROI) in an image. FIG. 8 simply illustrates dummy sample images generated by using a related method. Referring to FIG. 8, a real sample image on the left is rotated, flipped, scaled, and so on to obtain dummy samples on the right. However, in such a related method, transformation operations are only performed on the same object, which cannot increase diversity features of diseases. In the sample generation method in the embodiments of the present disclosure, noise vectors may be considered. Because the noise vectors represent diversity features, considering the noise vectors during generation of dummy samples can diversify the generated dummy samples. For example, for the same disease, because of different noise vectors, generated dummy samples have different features, and therefore, have pathological diversity.

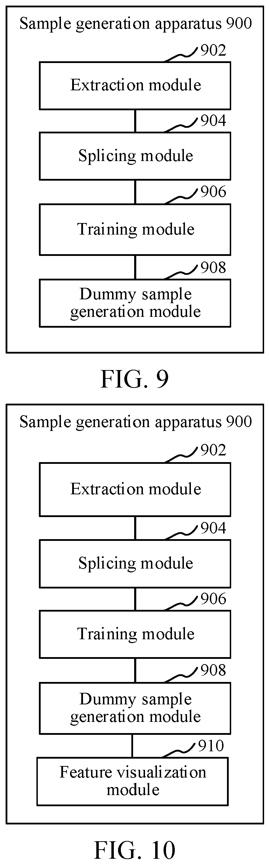

As shown in FIG. 9, in an embodiment, a sample generation apparatus 900 is provided. The apparatus may be disposed in the computer device of the foregoing embodiments. The apparatus 900 includes: an extraction module 902, a splicing module 904, a training module 906, and a dummy sample generation module 908.

The extraction module 902 is configured to obtain real category feature vectors extracted from real samples respectively.

The splicing module 904 is configured to splice the real category feature vectors with real category label vectors corresponding to the real samples.

The training module 906 is configured to input spliced vectors obtained through splicing to a current sample generation network, to obtain dummy samples through mapping; determine mutual information between the dummy samples and the corresponding spliced vectors; and input the real samples and the dummy samples to a current sample discrimination network, perform iterative adversarial training of the sample generation network and the sample discrimination network with reference to the mutual information, and iteratively maximize the mutual information during the adversarial training until an iteration stop condition is met.

The dummy sample generation module 908 is configured to input the spliced vectors to a sample generation network in a case that an iteration stops, to output a dummy sample set.

In an embodiment, the splicing module 904 is further configured to obtain real noise vectors in the real samples; and splice the real category feature vectors with the corresponding real category label vectors and the real noise vectors. The training module 906 is further configured to determine mutual information between the dummy samples and corresponding real category feature combination vectors, the real category feature combination vectors being obtained by splicing the real category feature vectors and the corresponding real category label vectors.

In an embodiment, the extraction module 902 is further configured to extract feature vectors from the real samples respectively; perform feature decomposition on the feature vectors, and sift feature vectors for category discrimination, to obtain the real category feature vectors; and obtain feature vectors that remain after the feature vector sifting, to obtain the real noise vectors.

In an embodiment, the extraction module 902 is further configured to pre-assign, for each real sample, corresponding category feature coefficients to feature sub-vectors in a feature vector of the real sample, to obtain category feature coefficient vectors; construct an objective function of the category feature coefficient vectors according to a sum of squared residuals of products between a real category label vector of the real sample and the feature sub-vectors; iteratively adjust the category feature coefficients of the feature sub-vectors in the category feature coefficient vectors, to iteratively search for a minimum value of the objective function of the category feature coefficient vectors until the iteration stops; and form, in a case that the iteration stops, the real category feature vector according to feature sub-vectors of which category feature coefficients are not 0.

In an embodiment, the training module 906 is further configured to sample from a first probability distribution according to a preset dummy category label vector, to obtain dummy category feature vectors, the first probability distribution being obtained by fitting the real category feature vectors; splice the dummy category feature vectors and the corresponding dummy category label vector, to obtain dummy spliced vectors, and input the dummy spliced vectors to the current sample generation network, to output dummy samples; and determine mutual information between the dummy samples and the corresponding dummy spliced vectors in a case that the dummy samples are obtained by mapping the dummy spliced vectors.

In an embodiment, the dummy spliced vectors further include dummy noise vectors, and the training module 906 is further configured to obtain the real noise vectors in the real samples other than the real category feature vectors; fit the real noise vectors, to obtain a second probability distribution; sample from the second probability distribution, to obtain the dummy noise vectors; and determine mutual information between the dummy samples and corresponding dummy category feature combination vectors, the dummy category feature combination vectors being obtained by splicing the dummy category feature vectors and the dummy category label vectors.

In an embodiment, the dummy sample generation module 908 is further configured to use the real category feature vectors and the dummy category feature vectors as levels in a category feature vector factor and the real noise vectors and the dummy noise vectors as levels in a noise vector factor, and perform cross-grouping on the levels in the category feature vector factor and the levels in the noise vector factor, to obtain to-be-spliced combinations; obtain a category label vector corresponding to a category feature vector included in each to-be-spliced combination; splice vectors included in the same to-be-spliced combination with the corresponding category label vector; and input vectors obtained by splicing the to-be-spliced combinations to the sample generation network in a case that the iteration stops, to output final dummy samples.

In an embodiment, the to-be-spliced combinations may include at least one of the following combinations:

a to-be-spliced combination including the real noise vector, the real category feature vector, and a real label vector corresponding to the real category feature vector;

a to-be-spliced combination including the dummy noise vector, the dummy category feature vector, and a dummy label vector corresponding to the dummy category feature vector;

a to-be-spliced combination including the dummy noise vector, the real category feature vector, and the real label vector corresponding to the real category feature vector; and

a to-be-spliced combination including the real noise vector, the dummy category feature vector, and the dummy label vector corresponding to the dummy category feature vector.

In an embodiment, the training module 906 is further configured to input the real samples and the dummy samples to the current sample discrimination network, to construct an objective function of the sample generation network and an objective function of the sample discrimination network, and perform iterative adversarial training of the sample generation network and the sample discrimination network with reference to the mutual information that serves as a regularization function, to iteratively search for a minimum value of the objective function of the sample generation network, search for a maximum value of the objective function of the sample discrimination network, and maximize the regularization function.

In an embodiment, a spliced vector including a real category feature vector and a corresponding real category label vector is a real spliced vector; and the training module 906 is further configured to obtain a dummy sample obtained by mapping the real spliced vector, to obtain a reconstructed dummy sample; obtain a reconstruction loss function, the reconstruction loss function being configured to represent a difference between the reconstructed dummy sample and a corresponding real sample; and input the real samples and the dummy samples to the current sample discrimination network, perform iterative adversarial training of the sample generation network and the sample discrimination network with reference to the mutual information and the reconstruction loss function with reference to the mutual information and the reconstruction loss function, and iteratively maximize the mutual information and searching for a minimum value of the reconstruction loss function during the adversarial training until the iteration stop condition is met.

As shown in FIG. 10, in an embodiment, the real category feature vector includes a plurality of features used for representing real sample categories. The apparatus 900 further includes:

a feature visualization module 910, configured to select target features from the real category feature vectors; evenly select feature values within a preset range for the target features, and maintain feature values of non-target features of the real category feature vectors unchanged, to obtain a plurality of associated real category feature vectors; and input the plurality of associated real category feature vectors to the sample generation network in a case that the iteration stops, to output associated dummy samples.

In an embodiment, the real sample is a real image sample, the dummy sample is a dummy image sample, and the real category feature vector is a feature vector used for discriminating a category of the real image sample.

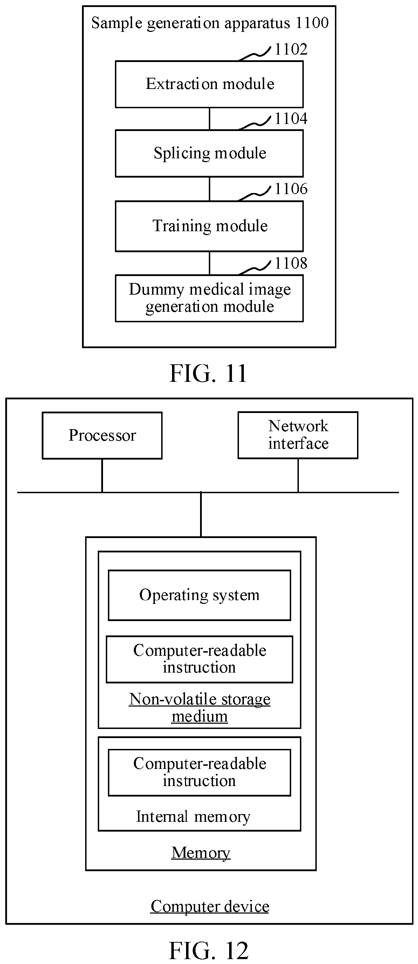

As shown in FIG. 11, in an embodiment, a sample generation apparatus 1100 is provided, including:

an extraction module 1102, configured to obtain real category feature vectors extracted from real medical image samples respectively;

a splicing module 1104, configured to splice the real category feature vectors with real category label vectors corresponding to the real medical image samples;

a training module 1106, configured to input spliced vectors obtained through splicing to a current sample generation network, to output dummy medical image samples; determine mutual information between the dummy medical image samples and the corresponding spliced vectors; input the real medical image samples and the dummy medical image samples to a current sample discrimination network, perform iterative adversarial training of the sample generation network and the sample discrimination network with reference to the mutual information, and iteratively maximize the mutual information during the adversarial training until an iteration stop condition is met; and

a dummy medical image generation module 1108, configured to input the spliced vectors to a sample generation network in a case that an iteration stops, to output final dummy medical image samples.

For a specific limitation on the sample generation apparatus, refer to the limitation on the sample generation method above. Details are not described herein again. The modules in the foregoing sample generation apparatus may be implemented entirely or partially by software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

FIG. 12 is a schematic diagram of an internal structure of a computer device according to an embodiment. Referring to FIG. 12, the computer device may be the server 120 shown in FIG. 1. The computer device includes a processor, a memory, and a network interface that are connected by using a system bus. The memory includes a non-volatile storage medium and an internal memory. The non-volatile storage medium of the computer device may store an operating system and computer-readable instructions. The computer-readable instructions, when executed, may cause the processor to perform a sample generation method. The processor of the computer device is configured to provide calculation and control capabilities, to support running of the entire computer device. The internal memory may also store computer-readable instructions. The computer-readable instructions, when executed by the processor, may cause the processor to perform a sample generation method. The network interface of the computer device is configured to perform network communication.

A person skilled in the art may understand that, the structure shown in FIG. 12 is only a block diagram of a part of a structure related to a solution of the present disclosure and does not limit the computer device to which the solution of the present disclosure is applied. Specifically, the computer device may include more or fewer components than those in the drawings, or some components are combined, or a different component deployment is used.

In an embodiment, the sample generation apparatus provided in the present disclosure may be implemented in a form of computer-readable instructions that can be run on the computer device shown in FIG. 12. The non-volatile storage medium of the computer device may store various program modules constituting the sample generation apparatus. For example, the extraction module 902, the splicing module 904, the training module 906, and the dummy sample generation module 908 shown in FIG. 9. The computer-readable instructions constituted by the program modules are used for causing the computer device to perform the operations in the sample generation method in the embodiments of the present disclosure described in this specification. For example, the computer device may obtain the real category feature vector extracted from each real sample by using the extraction module 902 in the sample generation apparatus 900 shown in FIG. 9. The computer device may splice the real category feature vectors with real category label vectors corresponding to the real samples by using the splicing module 904. The computer device may use the training module 906 to input spliced vectors obtained through splicing to a current sample generation network, to obtain dummy samples through mapping; determine mutual information between the dummy samples and the corresponding spliced vectors; and inputting the real samples and the dummy samples to a current sample discrimination network, perform iterative adversarial training of the sample generation network and the sample discrimination network with reference to the mutual information, and iteratively maximize the mutual information during the adversarial training until an iteration stop condition is met. The computer device may input, by using the dummy sample generation module 908, the spliced vectors to a sample generation network in a case that an iteration stops, to output a dummy sample set.

In an embodiment, a computer device is provided, including: a memory and one or more processors, the memory storing computer-readable instructions, the computer-readable instructions, when executed by the one or more processors, causing the one or more processors to perform the steps in the foregoing sample generation method. The steps of the sample generation method herein may be the steps of the sample generation method in the foregoing embodiments.

In an embodiment, one or more computer-readable storage media are provided, storing computer-readable instructions, the computer-readable instructions, when executed by one or more processors, causing the one or more processors to perform the steps in the foregoing sample generation method. The steps of the sample generation method herein may be the steps of the sample generation method in the foregoing embodiments.

"First" and "second" in the embodiments of the present disclosure are merely used for distinction, and are not intended to constitute a limitation in aspects of a size, an order, subordination, or the like. "A plurality of" refers to at least two.

It is to be understood that although the steps in the embodiments of the present disclosure are not necessarily performed sequentially in a sequence indicated by step numbers. Unless clearly specified in this specification, there is no strict sequence limitation on the execution of the steps, and the steps may be performed in another sequence. Moreover, at least some of the steps in each embodiment may include a plurality of sub-steps or a plurality of stages. The sub-steps or stages are not necessarily performed at the same moment but may be performed at different moments. The sub-steps or stages are not necessarily performed sequentially, but may be performed in turn or alternately with another step or at least some of sub-steps or stages for the another step.

A person of ordinary skill in the art may understand that all or some of the procedures of the methods in the foregoing embodiments may be implemented by a computer-readable instruction instructing relevant hardware. The program may be stored in a non-volatile computer-readable storage medium. When the program runs, the procedures of the foregoing method embodiments are performed. Any reference to a memory, a storage, a database, or another medium used in the embodiments provided in the present disclosure may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external high-speed cache. For the purpose of description instead of limitation, the RAM is available in a plurality of forms, such as a static RAM (SRAM), a dynamic RAM (DRAM), a synchronous DRAM (SDRAM), a double data rate SDRAM (DDR SDRAM), an enhanced SDRAM (ESDRAM), a synchronous link (Synchlink) DRAM (SLDRAM), a RAM bus (Rambus) direct RAM (RDRAM), a direct Rambus dynamic RAM (DRDRAM), and a Rambus dynamic RAM (RDRAM).

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments only describe several implementations of the present disclosure specifically and in detail, but cannot be construed as a limitation to the patent scope of the present disclosure. For a person of ordinary skill in the art, several transformations and improvements can be made without departing from the idea of the present disclosure. These transformations and improvements belong to the protection scope of the present disclosure. Therefore, the protection scope of the patent of the present disclosure shall be subject to the appended claims.

**Claims**

1.  A sample generation method, performed by a computer device, the method comprising:

      obtaining real category feature vectors extracted from real samples respectively;
      splicing the real category feature vectors with real category label vectors corresponding to the real samples;
      inputting spliced vectors obtained through splicing to a current sample generation network, to obtain dummy samples through mapping;
      determining mutual information between the dummy samples and the corresponding spliced vectors;
      inputting the real samples and the dummy samples to a current sample discrimination network, performing iterative adversarial training of the sample generation network and the sample discrimination network with reference to the mutual information, and iteratively maximizing the mutual information during the adversarial training until an iteration stop condition is met; and
      inputting the spliced vectors to a trained sample generation network in response to a determination that the iteration stop condition is met, to output a dummy sample set.

2.  The method according to claim 1, wherein the method further comprises:

      obtaining real noise vectors in the real samples;
      the splicing the real category feature vectors with the real category label vectors corresponding to the real samples comprises:

        splicing the real category feature vectors with the corresponding real category label vectors and the real noise vectors; and
        the determining mutual information between the dummy samples and the corresponding spliced vectors comprises:
        determining mutual information between the dummy samples and corresponding real category feature combination vectors, the real category feature combination vectors being obtained by splicing the real category feature vectors and the corresponding real category label vectors.

3.  The method according to claim 2, wherein the method further comprises:

      extracting feature vectors from the real samples respectively;
      performing feature decomposition on the feature vectors, and sifting feature vectors for category discrimination, to obtain the real category feature vectors; and
      obtaining feature vectors that remain after the feature vector sifting, to obtain the real noise vectors.

4.  The method according to claim 3, wherein the performing feature decomposition on the feature vectors, and sifting feature vectors for category discrimination, to obtain the real category feature vectors comprises:

      pre-assigning, for each real sample, corresponding category feature coefficients to feature sub-vectors in a feature vector of the real sample, to obtain category feature coefficient vectors;
      constructing an objective function of the category feature coefficient vectors according to a sum of squared residuals of products between a real category label vector of the real sample and the feature sub-vectors;
      iteratively adjusting the category feature coefficients of the feature sub-vectors in the category feature coefficient vectors, to iteratively search for a minimum value of the objective function of the category feature coefficient vectors until the iteration stops; and
      forming, in response to a determination that the iterative adjustment has stopped, the real category feature vector according to feature sub-vectors having category feature coefficients that are not 0.

5.  The method according to claim 2, wherein the method further comprises:

      sampling from a first probability distribution according to a preset dummy category label vector, to obtain dummy category feature vectors, the first probability distribution being obtained by fitting the real category feature vectors; and
      splicing the dummy category feature vectors and the corresponding dummy category label vector, to obtain dummy spliced vectors, and inputting the dummy spliced vectors to the current sample generation network, to output dummy samples; and

the determining mutual information between the dummy samples and the corresponding spliced vectors comprises:

determining mutual information between the dummy samples and the corresponding dummy spliced vectors in response to the dummy samples being obtained by mapping the dummy spliced vectors.

6.  The method according to claim 5, wherein the dummy spliced vectors further comprise dummy noise vectors, and the method further comprises:

    obtaining the real noise vectors in the real samples other than the real category feature vectors;
    fitting the real noise vectors, to obtain a second probability distribution; and
    sampling from the second probability distribution, to obtain the dummy noise vectors; and
    the determining mutual information between the dummy samples and the corresponding dummy spliced vectors comprises:
    determining mutual information between the dummy samples and corresponding dummy category feature combination vectors, the dummy category feature combination vectors being obtained by splicing the dummy category feature vectors and the dummy category label vectors.

7.  The method according to claim 6, wherein the inputting the spliced vectors to the trained sample generation network in response to the determination that the iteration stop condition is met, to output a dummy sample set comprises:

    using the real category feature vectors and the dummy category feature vectors as levels in a category feature vector factor and the real noise vectors and the dummy noise vectors as levels in a noise vector factor, and performing cross-grouping on the levels in the category feature vector factor and on the levels in the noise vector factor, to obtain to-be-spliced combinations;
    obtaining a category label vector corresponding to a category feature vector comprised in each to-be-spliced combination;
    splicing vectors comprised in each to-be-spliced combination with the corresponding category label vector; and
    inputting vectors obtained by splicing the to-be-spliced combinations to the trained sample generation network in response to the determination that the iteration stop condition is met, to output final dummy samples.

8.  The method according to claim 7, wherein the to-be-spliced combinations comprise at least one of the following combinations:

    a to-be-spliced combination comprising a real noise vector, a real category feature vector, and a real label vector corresponding to the real category feature vector;
    a to-be-spliced combination comprising a dummy noise vector, a dummy category feature vector, and a dummy label vector corresponding to the dummy category feature vector;
    a to-be-spliced combination comprising a dummy noise vector, a real category feature vector, and a real label vector corresponding to the real category feature vector; and
    a to-be-spliced combination comprising a real noise vector, a dummy category feature vector, and a dummy label vector corresponding to the dummy category feature vector.

9.  The method according to claim 1, wherein the inputting the real samples and the dummy samples to the current sample discrimination network, performing the iterative adversarial training of the sample generation network and the sample discrimination network with reference to the mutual information comprises:

    inputting the real samples and the dummy samples to the current sample discrimination network, to construct an objective function of the sample generation network and an objective function of the sample discrimination network, and performing iterative adversarial training of the sample generation network and the sample discrimination network with reference to the mutual information serving as a regularization function, to iteratively search for a minimum value of the objective function of the sample generation network, search for a maximum value of the objective function of the sample discrimination network, and maximize the regularization function.

10. The method according to any one of claims 1 to 9, wherein a spliced vector comprising a real category feature vector and a corresponding real category label vector is a real spliced vector;
    the method further includes:

    obtaining a dummy sample obtained by mapping the real spliced vector, to obtain a reconstructed dummy sample;

obtaining a reconstruction loss function, the reconstruction loss function being configured to represent a difference between the reconstructed dummy sample and a corresponding real sample; and
the inputting the real samples and the dummy samples to the current sample discrimination network, performing the iterative adversarial training of the sample generation network and the sample discrimination network with reference to the mutual information, and iteratively maximizing the mutual information during the adversarial training until the iteration stop condition is met includes:

inputting the real samples and the dummy samples to the current sample discrimination network, performing the iterative adversarial training of the sample generation network and the sample discrimination network with reference to the mutual information and the reconstruction loss function, and iteratively maximizing the mutual information and searching for a minimum value of the reconstruction loss function during the adversarial training until the iteration stop condition is met.

11. The method according to any one of claims 1 to 9, wherein each real category feature vector includes a plurality of features used for representing real sample categories, and the method further includes:

selecting target features from the real category feature vectors;
evenly selecting feature values within a preset range for the target features, and maintaining feature values of non-target features of the real category feature vectors unchanged, to obtain a plurality of associated real category feature vectors; and
inputting the plurality of associated real category feature vectors to the trained sample generation network in response to the determination that the iteration stop condition is met, to output associated dummy samples.

12. The method according to any one of claims 1 to 9, wherein each real sample is a real image sample, each dummy sample is a dummy image sample, and each real category feature vector is a feature vector used for discriminating a category of the real image sample.

13. A sample generation method, performed by a computer device, the method including:

obtaining real category feature vectors extracted from real medical image samples respectively;
splicing the real category feature vectors with real category label vectors corresponding to the real medical image samples;
inputting spliced vectors obtained through splicing to a current sample generation network, to output dummy medical image samples;
determining mutual information between the dummy medical image samples and the corresponding spliced vectors;
inputting the real medical image samples and the dummy medical image samples to a current sample discrimination network, performing iterative adversarial training of the sample generation network and the sample discrimination network with reference to the mutual information, and iteratively maximizing the mutual information during the adversarial training until an iteration stop condition is met; and
inputting the spliced vectors to a trained sample generation network in response to a determination that the iteration stop condition is met, to output final dummy medical image samples.

14. The method according to claim 13, wherein the method further comprises:

obtaining real noise vectors in the real medical image samples;
the splicing the real category feature vectors with the real category label vectors corresponding to the real medical image samples includes:

splicing the real category feature vectors with the corresponding real category label vectors and the real noise vectors; and
the determining mutual information between the dummy medical image samples and the corresponding spliced vectors includes:
determining mutual information between the dummy medical image sample and corresponding real category feature combination vectors, the real category feature combination vectors being obtained by splicing the real category feature vectors and the corresponding real category label vectors.

15. The method according to claim 14, wherein the method further comprises:

extracting feature vectors from the real medical image samples respectively;
performing feature decomposition on the feature vectors, and sifting feature vectors for category discrimination, to obtain the real category feature vectors; and
obtaining feature vectors that remain after the feature vector sifting, to obtain the real noise vectors.

16. The method according to claim 14, wherein the method further comprises:

sampling from a first probability distribution according to a preset dummy category label vector, to obtain dummy category feature vectors, the first probability distribution being obtained by fitting the real category feature vectors; and
splicing the dummy category feature vectors and the corresponding dummy category label vector, to obtain dummy spliced vectors, and inputting the dummy spliced vectors to a current medical image sample generation network, to output dummy medical image samples; and
the determining mutual information between the dummy medical image samples and the corresponding spliced vectors includes:
determining mutual information between the dummy medical image samples and corresponding dummy spliced vectors in response to the dummy medical image samples being obtained by mapping the dummy spliced vectors.

17. A sample generation apparatus, disposed in a computer device, the apparatus including:

an extraction module, configured to obtain real category feature vectors extracted from real samples respectively;
a splicing module, configured to splice the real category feature vectors with real category label vectors corresponding to the real samples;
a training module, configured to input spliced vectors obtained through splicing to a current sample generation network, to obtain dummy samples through mapping; determine mutual information between the dummy samples and the corresponding spliced vectors; and input the real samples and the dummy samples to a current sample discrimination network, perform iterative adversarial training of the sample generation network and the sample discrimination network with reference to the mutual information, and iteratively maximize the mutual information during the adversarial training until an iteration stop condition is met; and
a dummy sample generation module, configured to input the spliced vectors to a trained sample generation network in response to a determination that the iteration stop condition is met, to output a dummy sample set.

18. The apparatus according to claim 17, wherein the splicing module is further configured to obtain real noise vectors in the real samples; and splice the real category feature vectors with the corresponding real category label vectors and the real noise vectors; and the training module is further configured to determine mutual information between the dummy samples and corresponding real category feature combination vectors, the real category feature combination vectors being obtained by splicing the real category feature vectors and the corresponding real category label vectors.

19. The apparatus according to claim 18, wherein the extraction module is further configured to extract feature vectors from the real samples respectively; perform feature decomposition on the feature vectors, and sift feature vectors for category discrimination, to obtain the real category feature vectors; and obtain feature vectors that remain after the feature vector sifting, to obtain the real noise vectors.

20. The apparatus according to claim 19, wherein the extraction module is further configured to pre-assign, for each real sample, corresponding category feature coefficients to feature sub-vectors in a feature vector of the real sample, to obtain category feature coefficient vectors; construct an objective function of the category feature coefficient vectors according to a sum of squared residuals of products between a real category label vector of the real sample and the feature sub-vectors; iteratively adjust the category feature coefficients of the feature sub-vectors in the category feature coefficient vectors, to iteratively search for a minimum value of the objective function of the category feature coefficient vectors until the iteration stops; and form, in response to a determination that the iterative adjustment has stopped, the real category feature vector according to feature sub-vectors having category feature coefficients that are not 0.

21. The apparatus according to claim 18, wherein the training module is further configured to sample from a first probability distribution according to a preset dummy category label vector, to obtain dummy category feature vectors, the first probability distribution being obtained by fitting the real category feature vectors; splice the dummy category feature vectors and the corresponding dummy category label vector, to obtain dummy spliced vectors, and input the dummy spliced vectors to the current sample generation network, to output dummy samples; and determine mutual information between the dummy samples and the corresponding dummy spliced vectors in response to the dummy samples being obtained by mapping the dummy spliced vectors.

22. The apparatus according to claim 21, wherein the dummy spliced vectors further comprise dummy noise vectors, and the training module is further configured to obtain the real noise vectors in the real samples other than the real category feature vectors; fit the real noise vectors, to obtain a second probability distribution; sample from the second probability distribution, to obtain the dummy noise vectors; and determine mutual information between the dummy samples and corresponding dummy category feature combination vectors, the dummy category feature combination vectors being obtained by splicing the dummy category feature vectors and the dummy category label vectors.

23. The apparatus according to claim 22, wherein the dummy sample generation module is further configured to use the real category feature vectors and the dummy category feature vectors as levels in a category feature vector factor and the real noise vectors and the dummy noise vectors as levels in a noise vector factor, and perform cross-grouping on the levels in the category feature vector factor and on the levels in the noise vector factor, to obtain to-be-spliced combinations; obtain a category label vector corresponding to a category feature vector included in each to-be-spliced combination; splice vectors included in each to-be-spliced combination with the corresponding category label vector; and input vectors obtained by splicing the to-be-spliced combinations to the trained sample generation network in response to the determination that the iteration stop condition is met, to output final dummy samples.

24. The apparatus according to claim 23, wherein the to-be-spliced combinations comprise at least one of the following combinations:

a to-be-spliced combination comprising a real noise vector, a real category feature vector, and a real label vector corresponding to the real category feature vector;
a to-be-spliced combination comprising a dummy noise vector, a dummy category feature vector, and a dummy label vector corresponding to the dummy category feature vector;
a to-be-spliced combination comprising a dummy noise vector, a real category feature vector, and a real label vector corresponding to the real category feature vector; and
a to-be-spliced combination comprising a real noise vector, a dummy category feature vector, and a dummy label vector corresponding to the dummy category feature vector.

25. The apparatus according to claim 17, wherein the training module is further configured to input the real samples and the dummy samples to the current sample discrimination network, to construct an objective function of the sample generation network and an objective function of the sample discrimination network, and perform iterative adversarial training of the sample generation network and the sample discrimination network with reference to the mutual information serving as a regularization function, to iteratively search for a minimum value of the objective function of the sample generation network, search for a maximum value of the objective function of the sample discrimination network, and maximize the regularization function.

26. The apparatus according to any one of claims 17 to 25, wherein a spliced vector including a real category feature vector and a corresponding real category label vector is a real spliced vector; and the training module is further configured to obtain a dummy sample obtained by mapping the real spliced vector, to obtain a reconstructed dummy sample; obtain a reconstruction loss function, the reconstruction loss function being configured to represent a difference between the reconstructed dummy sample and a corresponding real sample; and input the real samples and the dummy samples to the current sample discrimination network, perform iterative adversarial training of the sample generation network and the sample discrimination network with reference to the mutual information and the reconstruction loss function, and iteratively maximize the mutual information and searching for a minimum value of the reconstruction loss function during the adversarial training until the iteration stop condition is met.

27. The apparatus according to any one of claims 17 to 25, wherein each real category feature vector includes a plurality of features used for representing real sample categories, and
the apparatus further includes:

a feature visualization module, configured to select target features from the real category feature vectors; evenly select feature values within a preset range for the target features, and maintain feature values of non-target features of the real category feature vectors unchanged, to obtain a plurality of associated real category feature vectors; and input the plurality of associated real category feature vectors to the trained sample generation network in response to the determination that the iteration stop condition is met, to output associated dummy samples.

28. The apparatus according to any one of claims 17 to 25, wherein each real sample is a real image sample, each dummy sample is a dummy image sample, and each real category feature vector is a feature vector used for discriminating a category of the real image sample.

29. A sample generation apparatus, disposed in a computer device, the apparatus including:

an extraction module, configured to obtain real category feature vectors extracted from real medical image samples respectively;
a splicing module, configured to splice the real category feature vectors with real category label vectors corresponding to the real medical image samples;
a training module, configured to input spliced vectors obtained through splicing to a current sample generation network, to output dummy medical image samples; determine mutual information between the dummy medical image samples and the corresponding spliced vectors; input the real medical image samples and the dummy medical image samples to a current sample discrimination network, perform iterative adversarial training of the sample generation network and the sample discrimination network with reference to the mutual information, and iteratively maximize the mutual information during the adversarial training until an iteration stop condition is met; and
a dummy medical image generation module, configured to input the spliced vectors to a trained sample generation network in response to a determination that the iteration stop condition is met, to output final dummy medical image samples.

30. A computer device, including a memory and a processor, the memory storing computer-readable instructions, the computer-readable instructions, when executed by the processor, causing the processor to perform operations of the method according to any one of claims 1 to 16.

31. A computer-readable storage medium, storing computer-readable instructions, and the computer-readable instructions, when executed by a processor, causing the processor to perform the operations in the method according to any one of claims 1 to 16.

110

120

Network
connection

## FIG. 1

S202

Obtain real category feature vectors extracted from real samples respectively

S204

Splice the real category feature vectors with real category label vectors corresponding to the real samples

S206

Input spliced vectors obtained through splicing to a current sample generation network, to obtain dummy samples through mapping

S208

Determine mutual information between the dummy samples and the corresponding spliced vectors

S210

Input the real samples and the dummy samples to a current sample discrimination network, perform iterative adversarial training of the sample generation network and the sample discrimination network with reference to the mutual information, and iteratively maximize the mutual information during the adversarial training until an iteration stop condition is met

S212

Input the spliced vectors to a sample generation network in a case that an iteration stops, to output a dummy sample set

## FIG. 2

| Category feature coefficient vector $w$ | $w_1$ | $w_2$ | $w_3$ | $w_4$ | $w_5$ | $w_6$ | $w_7$ | ... | ... | $w_{m-2}$ | $w_{m-1}$ | $w_m$ |
|---|---|---|---|---|---|---|---|---|---|---|---|---|
| Feature vector $f$ | $f_1$ | $f_2$ | $f_3$ | $f_4$ | $f_5$ | $f_6$ | $f_7$ | ... | ... | $f_{m-2}$ | $f_{m-1}$ | $f_m$ |

| $f_1$ | $f_2$ | $f_3$ | $f_4$ | $f_5$ | $f_6$ | ... | $f_{m-2}$ | $f_{m-1}$ |
|---|---|---|---|---|---|---|---|---|

| $f_7$ | ... | $f_m$ |
|---|---|---|

Real noise vector $z$

Real category feature vector $c$

FIG. 3

| Module 1: Classifier | Module 2: Feature space design | Module 3: Generative adversarial network |
|---|---|---|
| Input: real sample and real category label vector, that is, $X, y$<br>Output: predicted category vector $\hat{y}$ and feature vector $f$ | Input: feature vector $f$ and real category label vector $y$<br>Output: perform feature decomposition to obtain a real category feature vector $c$—first probability distribution $p(c\|y)$, and a real noise vector $z$—second probability distribution $p(z)$ | Input: real sample $X$, real category label vector $y$, real category feature vector $c$, first probability distribution $p(c\|y)$, real noise vector $z$, and second probability distribution $p(z)$<br>Output: dummy sample and dummy category label vector $\widetilde{X}, \widetilde{y}$ |

$X, y$

Training

Classifier

Prediction

$\hat{y}$ $f$

Feature vector $f$

$y$

Decomposition — Lasso algorithm

Real category feature vector $c$  Real noise vector $z$

Probability modeling

$c \sim p(c|y)$  $z \sim p(z)$

$\{X, y, \ c \sim p(c|y), \ z \sim p(z)\}$

Training

Generative adversarial network

Generation

$\widetilde{X}, \widetilde{y}$

Add to update a classifier

FIG. 4

FIG. 5

S602

Obtain real category feature vectors extracted from real medical image samples

S604

Splice the real category feature vectors with real category label vectors corresponding to the real medical image samples

S606

Input spliced vectors obtained through splicing to a current sample generation network, to output dummy medical image samples

S608

Determine mutual information between the dummy medical image samples and the corresponding spliced vectors

S610

Input the real medical image samples and the dummy medical image samples to a current sample discrimination network, perform iterative adversarial training of the sample generation network and the sample discrimination network with reference to the mutual information, and iteratively maximize the mutual information during the adversarial training until an iteration stop condition is met

S612

Input the spliced vectors to a sample generation network in a case that an iteration stops, to output final dummy medical image samples

FIG. 6

Real sample   Dummy sample

FIG. 7

Real sample

Dummy sample

FIG. 8

Sample generation apparatus 900

Extraction module ⟋902

Splicing module ⟋904

Training module ⟋906

Dummy sample generation module ⟋908

FIG. 9

Sample generation apparatus 900

Extraction module ⟋902

Splicing module ⟋904

Training module ⟋906

Dummy sample generation module ⟋908

Feature visualization module ⟋910

FIG. 10

Sample generation apparatus 1100

1102

Extraction module

1104

Splicing module

1106

Training module

1108

Dummy medical image generation module

FIG. 11

Processor

Network interface

Operating system

Computer-readable instruction

Non-volatile storage medium

Computer-readable instruction

Internal memory

Memory

Computer device

FIG. 12

## INTERNATIONAL SEARCH REPORT

| International application No. |
| --- |
| **PCT/CN2020/098839** |

**A. CLASSIFICATION OF SUBJECT MATTER**

G06K 9/62(2006.01)i

According to International Patent Classification (IPC) or to both national classification and IPC

**B. FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

WPI, EPODOC, CNKI, CNPAT: 样本, 生成, 扩展, 扩充, 对抗, 互信息, 标签, 特征, 向量, 拼接, sample, generation, extend, confrontation, mutual, information, label, feature, vector

**C. DOCUMENTS CONSIDERED TO BE RELEVANT**

| Category* | Citation of document, with indication, where appropriate, of the relevant passages | Relevant to claim No. |
| --- | --- | --- |
| PX | CN 110598765 A (TENCENT TECHNOLOGY SHENZHEN CO., LTD.) 20 December 2019 (2019-12-20) description paragraphs [0169], [0311]-[0315], claims 1-15 | 1-31 |
| A | CN 109948660 A (CHANGSHA UNIVERSITY OF SCIENCE & TECHNOLOGY) 28 June 2019 (2019-06-28) description paragraphs [0055]-[0078], claim 1 | 1-31 |
| A | CN 109978897 A (CHINA UNIVERSITY OF MINING AND TECHNOLOGY) 05 July 2019 (2019-07-05) entire document | 1-31 |
| A | CN 110135583 A (BEIJING HORIZON ROBOTICS TECHNOLOGY RESEARCH AND DEVELOPMENT CO., LTD.) 16 August 2019 (2019-08-16) entire document | 1-31 |
| A | US 2017337682 A1 (SIEMENS HEALTHCARE GMBH) 23 November 2017 (2017-11-23) entire document | 1-31 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 September 2020** | **28 September 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/098839**

| Patent document cited in search report | | | Publication date (day/month/year) | Patent family member(s) | | | Publication date (day/month/year) |
|---|---|---|---|---|---|---|---|
| CN | 110598765 | A | 20 December 2019 | None | | | |
| CN | 109948660 | A | 28 June 2019 | None | | | |
| CN | 109978897 | A | 05 July 2019 | None | | | |
| CN | 110135583 | A | 16 August 2019 | None | | | |
| US | 2017337682 | A1 | 23 November 2017 | EP | 3246875 | A2 | 22 November 2017 |
| | | | | CN | 107403446 | A | 28 November 2017 |

Form PCT/ISA/210 (patent family annex) (January 2015)

**EP 3 940 592 A1**

**REFERENCES CITED IN THE DESCRIPTION**

**Patent documents cited in the description**

* CN 201910801840